(19) Europäisches Patentamt
European Patent Office
Office européen des brevets

(11) EP 4 718 328 A1

(12) **EUROPEAN PATENT APPLICATION**
published in accordance with Art. 153(4) EPC

(43) Date of publication:
**01.04.2026 Bulletin 2026/14**

(21) Application number: **24815700.0**

(22) Date of filing: **16.04.2024**

(51) International Patent Classification (IPC):
***G06N 3/0495*** *(2023.01)* ***G06N 3/096*** *(2023.01)*
***G06N 3/08*** *(2023.01)* ***G06N 3/045*** *(2023.01)*
***G06T 3/40*** *(2024.01)*

(52) Cooperative Patent Classification (CPC):
**G06N 3/045; G06N 3/0495; G06N 3/08; G06N 3/096; G06T 3/40**

(86) International application number:
**PCT/KR2024/005078**

(87) International publication number:
**WO 2024/248321 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.05.2023 KR 20230070419**
**04.08.2023 KR 20230102282**

(71) Applicant: **Samsung Electronics Co., Ltd.**
**Suwon-si, Gyeonggi-do 16677 (KR)**

(72) Inventors:
- **CHOI, Kyuha**
**Suwon-si, Gyeonggi-do 16677 (KR)**
- **LEE, Hyunseung**
**Suwon-si, Gyeonggi-do 16677 (KR)**
- **MOON, Youngsu**
**Suwon-si, Gyeonggi-do 16677 (KR)**
- **JEONG, Younghoon**
**Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **METHOD FOR CONDENSING TRAINING DATASET, AND IMAGE PROCESSING DEVICE**

(57) A method of condensing a training dataset and an image processing device are provided. The method of condensing the training dataset includes generating a cluster set by clustering the training dataset, generating an initial condensed high-resolution (HR) dataset by selecting, for each cluster included in the cluster set, some of images included in each cluster, obtaining a first loss of a first neural network model based on the training dataset and obtaining a second loss of a second neural network model based on the initial condensed HR dataset, and generating a condensed HR dataset by updating, based on the first loss and the second loss, pixels in each of images included in the initial condensed HR dataset.

FIG. 6
Forward pass
Backward pass
1300
530
Training dataset: LR dataset
630
635
631
Training dataset: HR dataset
Output
Loss
612
611
GRADIENT MATCHING UNIT
520
Update
Matching Loss
650
Initial condensed HR dataset
Condensed LR dataset
640
Condensed HR dataset
641
601
Loss
Output
622
645
621
540
JPEG (Enc/Dec)
Gaussian Blur
Down Sample

EP 4 718 328 A1

## Description

### TECHNICAL FIELD

The disclosure relate to a method of condensing a training dataset, and an image processing device, and more particularly, to a method of condensing a training dataset, and an image processing device for performing image quality processing on low-quality images by using the condensed training dataset.

### BACKGROUND ART

Recently, with the rapid increase in display screen size and resolution of image processing devices for processing images, upscaling technology that converts low-resolution (LR) images into high-resolution (HR) images has been developed.

In addition, with advancements in deep learning technology, various forms of learning-based upscaling technologies have been developed. Learning-based upscaling technology shows excellent performance when the image quality of a training image is similar to the quality characteristics of an input image to be actually processed, but there is a problem in that image quality performance deteriorates significantly when the characteristics of an image to be processed are different from input image quality assumed during training.

To address this problem, research is being conducted on upscaling technology through on-device learning which processes and adapts an artificial intelligence (AI) model to input images.

For example, a training dataset similar to the quality characteristics of input image(s) may be generated in real time on an edge device such as a TV or mobile device, an AI model may be trained using the training dataset, and the input image(s) may be upscaled using the trained AI model. In this case, a sufficiently large training dataset is required to improve the performance of on-device learning, but the size of an available training dataset is limited by available computational resources and memory resources of the edge device.

Accordingly, research is being conducted to use a training dataset of sufficient size for on-device learning. For example, high-quality external image patches similar to the content characteristics of an input image may be stored in an external memory, and then image patches similar to the quality characteristics of the input image may be selected from among the external image patches and used as a training dataset. However, the method of generating a training dataset for on-device learning is inefficient for edge devices that lack computational resources and internal memory because it requires storing the high-quality external image patches in the external memory without additional processing.

On the other hand, unlike in the fields of image processing and upscaling, research is underway in the field of image classification to condense a large training dataset into a small training dataset and utilize the small training dataset in order to efficiently perform network architecture search and learning.

Paper 1 (Dataset Condensation with Gradient Matching, ICLR 2021) presents a technique for condensing a large training dataset into a small training dataset so that the performance of a network trained with the large training dataset is comparable to the performance of a network trained with the small training dataset. The process of condensing a large training dataset into a small training dataset is performed through training. Specifically, in order to condense the large training dataset, the small training dataset is iteratively updated so that a gradient of network parameters calculated from the large training dataset is similar to a gradient of network parameters calculated from the small training dataset.

However, the dataset condensation method used in the field of image classification is a technique for condensing a dataset consisting of data-label pairs, and there is a problem in that it is difficult to apply the technique to condensing a dataset in the field of upscaling, which consists of LR-HR image pairs.

### DISCLOSURE OF INVENTION

### SOLUTION TO PROBLEM

According to an embodiment of the present disclosure, a method of condensing a training dataset includes generating a cluster set by clustering the training dataset, generating an initial condensed high-resolution (HR) dataset by selecting, for each cluster included in the cluster set, some of images included in each cluster, obtaining a first loss of a first neural network model based on the training dataset and obtaining a second loss of a second neural network model based on the initial condensed HR dataset, and generating a condensed HR dataset by updating, based on the first loss and the second loss, pixels in each of images included in the initial condensed HR dataset.

According to an embodiment of the present disclosure, an image processing device includes memory storing one or more instructions, and one or more processors configured to execute the one or more instructions stored in the memory. The one or more processors are configured to execute the one or more instructions to obtain a meta model for processing an image quality of an input image. The one or more processors are configured to execute the one or more instructions to obtain a condensed HR dataset corresponding to a training dataset. The one or more processors are configured to execute the one or more instructions to obtain a degraded dataset from the condensed HR dataset by using the input image. The one or more processors are configured to execute the one or more instructions to obtain an image-quality processed output image, based on the meta model trained using the condensed HR dataset and the degraded dataset.

BRIEF DESCRIPTION OF DRAWINGS

FIG. 1 is a diagram illustrating an image processing device outputting an image quality-processed image, according to an embodiment.
FIG. 2 is block diagram of an image processing device and a block diagram of a server, according to an embodiment.
FIG. 3 is an internal block diagram of a processor of a server, according to an embodiment.
FIG. 4 is a diagram illustrating a training dataset clustered according to a clustering operation of a server, according to an embodiment.
FIG. 5 is an internal block diagram illustrating a dataset condensing unit of a server, according to an embodiment.
FIG. 6 is a diagram illustrating an operation in which a server condenses a training dataset, according to an embodiment.
FIG. 7A is a diagram illustrating an initial condensed high-resolution (HR) dataset and a condensed HR dataset obtained according to a condensation operation of a server, according to an embodiment.
FIG. 7B is a detailed diagram illustrating an initial condensed HR dataset and a condensed HR dataset obtained according to a condensation operation of a server, according to an embodiment.
FIG. 8A is a flowchart illustrating a method of condensing a training dataset, according to an embodiment.
FIG. 8B is a detailed flowchart illustrating a method of condensing a training dataset, according to an embodiment.
FIG. 8C is a flowchart illustrating a method of condensing a training dataset, according to an embodiment.
FIG. 9A is a diagram illustrating a process by which a server condenses a training dataset by category, according to an embodiment.
FIG. 9B is a diagram illustrating a process by which a server condenses a training dataset by type of content, according to an embodiment. FIG. 10 is a flowchart illustrating a method of condensing a training dataset by category, according to an embodiment.
FIG. 11 is an internal block diagram of a processor of an image processing device, according to an embodiment.
FIG. 12A is a diagram illustrating a model training unit according to an embodiment.
FIG. 12B is a diagram illustrating a model training unit according to an embodiment.
FIG. 13 is a diagram illustrating an operation in which a degradation processor performs image quality processing on a training dataset, according to an embodiment.
FIG. 14A is a diagram illustrating a model training unit according to an embodiment.
FIG. 14B is a diagram illustrating an operation of a training data selector including an artificial intelligence (AI) model, according to an embodiment.
FIG. 14C is a diagram illustrating a model training unit according to an embodiment.
FIG. 15 is a flowchart of a method of performing image quality processing on an input image, according to an embodiment.
FIG. 16 is a diagram illustrating an operation in which a streaming server condenses a training dataset and an operation in which an image processing device stores training data, according to an embodiment.
FIG. 17 is a diagram illustrating an operation in which an image processing device condenses a training dataset according to a background process, according to an embodiment.

MODE FOR THE INVENTION

Throughout the present disclosure, the expression "at least one of a, b or c" indicates only a, only b, only c, both a and b, both a and c, both b and c, all of a, b, and c, or variations thereof.
An embodiment of the present disclosure will be described more fully hereinafter with reference to the accompanying drawings so that the embodiment may be easily implemented by one of ordinary skill in the art. However, the present disclosure may be implemented in different forms and should not be construed as being limited to an embodiment set forth herein.
The terminology used herein may be a general term currently widely used in the art based on functions described in the present disclosure, but it may mean various other terms according to an intention of a technician engaged in the art, precedent cases, advent of new technologies, etc. Thus, the terms used herein should be defined not by simple appellations thereof but based on the meaning of the terms together with the overall description of the present disclosure.

In addition, the terms used herein are only used to describe a particular embodiment, and are not intended to limit the present disclosure.

Throughout the specification, it will be understood that when a part is referred to as being "connected" or "coupled" to another part, it may be "directly connected" to or "electrically coupled" to the other part with one or more intervening elements therebetween.

The use of the terms "the" and similar referents used in the specification, especially in the following claims, are to be construed to cover both the singular and the plural. Furthermore, operations of a method according to the present disclosure described herein may be performed in any suitable order unless the order of the operations is clearly specified herein. The present disclosure is not limited to the described order of the operations.

Expressions such as "in some embodiments" or "in an embodiment" described in various parts of this specification do not necessarily refer to the same embodiment(s).

Some embodiments may be described in terms of functional block components and various processing operations. Some or all of such functional blocks may be implemented by any number of hardware and/or software components that execute specific functions. For example, functional blocks of the present disclosure may be implemented by one or more microprocessors or by circuit components for performing certain functions. Furthermore, for example, functional blocks of the present disclosure may be implemented in various programming or scripting languages. The functional blocks may be implemented using various algorithms executed by one or more processors. Furthermore, the present disclosure may employ techniques of the related art for electronics configuration, signal processing, and/or data processing. The terms such as "mechanism", "element", "means", and "construction" may be used in a broad sense and are not limited to mechanical or physical components.

Furthermore, connecting lines or connectors shown in various figures are intended to represent exemplary functional relationships and/or physical or logical couplings between components in the figures. In an actual device, connections between components may be represented by various alternative or additional functional relationships, physical connections, or logical connections.

As used herein, the term "unit" or "module" indicates a unit for processing at least one function or operation and may be implemented using hardware or software or a combination of hardware and software.

Furthermore, in the specification, the term "user" refers to a person who uses an image processing device and may include a consumer, an evaluator, a viewer, an administrator, or an installation engineer. Also, in the specification, a "manufacturer" may refer to a manufacturer that manufactures an image processing device and/or components included in the image processing device.

In the present disclosure, a training dataset being condensed may mean that pixels in images included in the training dataset are updated. 'Condensing of a training dataset' may be expressed as 'synthesis of a training dataset', 'updating of a training dataset', or 'training on a training dataset'. For example, condensation may mean that new images that are completely different from images included in a previous training dataset are generated as pixels in images included in a training dataset are iteratively updated.

In addition, in the present disclosure, according to the operation of condensing the training dataset, a small training dataset may be obtained from a large training dataset. In this case, the characteristics of the large training dataset are similar to those of the small training dataset. The characteristics of the large training dataset being similar to those of the small training dataset may mean that the performance of a neural network model trained with the large training dataset is similar to the performance of a neural network model trained with the small training dataset. In the present disclosure, similar performance between the neural network models may mean that parameters of the respective neural network models are similar, or that gradients of the respective neural network models are similar. In the present disclosure, 'similar' may be a concept that includes not only being approximate to each other, but also being identical to each other.

In the present disclosure, a small training dataset may be referred to as a condensed dataset obtained by condensing a large training dataset, or a synthetic dataset synthesized from the large training dataset.

In the present disclosure, a training dataset may correspond to a high-resolution (or HR) dataset including high-resolution images. In the present disclosure, a high-resolution dataset may be described as being 'high-resolution' in the sense that it includes images with a higher resolution than a low-resolution (or LR) dataset generated by degrading the high-resolution dataset.

In the present disclosure, a condensed dataset may correspond to a condensed high-resolution dataset. In the present disclosure, a condensed high-resolution dataset may be referred to as a condensed HR dataset.

In the present disclosure, a training dataset is exemplified as including an image, but is not limited thereto, and may further include patches or the like cropped out from images to have semantic information.

Hereinafter, the present disclosure is described in detail with reference to the accompanying drawings.

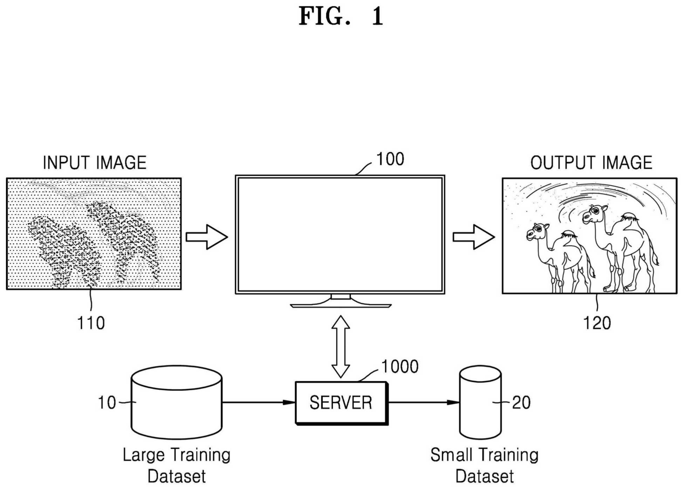

FIG. 1 is a diagram illustrating an image processing device outputting an image quality-processed image, according to an embodiment.

Referring to FIG. 1, an image processing device 100 may be an electronic device capable of processing and outputting an image. In an embodiment, the image processing device 100 may be implemented as various types of electronic devices including a display.

The image processing device 100 may be implemented in a stationary or portable form, and may be a digital television (TV) capable of receiving digital broadcasts. The image processing device 100 may include at least one of a desktop computer, a smartphone, a tablet personal computer (PC), a mobile phone, a video phone, an e-book reader, and a laptop PC, a netbook computer, a digital camera, a personal multimedia assistant (PDA), a portable able multimedia player (PMP), a camcorder, a navigation device, a wearable device, a smart watch, a home network system, a security system, or a medical device.

The image processing device 100 may be implemented not only as a flat display device but also as a curved display device with a screen having a curvature or a flexible display device with an adjustable curvature. An output resolution of the image processing device 100 may have various resolutions, such as High Definition (HD), Full HD, Ultra HD, or resolutions higher than the Ultra HD.

The image processing device 100 may output a video. A video may be composed of a plurality of frames. Videos may include items for various movies, dramas, etc., available via video on demand (VOD) services or TV programs provided by content providers. A content provider may refer to a terrestrial broadcasting station, a cable broadcasting station, an over-the-top (OTT) service provider, or an Internet Protocol TV (IPTV) service provider that provides various types of content including videos to consumers. After a video is captured, compressed, and transmitted, the video is then restored and output by the image processing device 100. Due to limitations in the physical characteristics of a device used to capture a video and its limited bandwidth, information is lost and image distortion occurs. The quality of the distorted video may be degraded.

In an embodiment, the image processing device 100 may process an image quality of an image. The image processing device 100 may process an image quality of an image distorted due to loss of information caused by limitations in the physical characteristics of the device and limited bandwidth, as described above. In an embodiment, the image processing device 100 may obtain an output image 120 by processing an image quality of an input image 110.

In an embodiment, the image processing device 100 may utilize artificial intelligence (AI) technology to process an image quality of an image. In an embodiment, the image processing device 100 may be an edge device in which AI is combined with an electronic device that outputs an image to a user. In an embodiment, the image processing device 100 may process an image quality of an image by using on-device AI technology. The on-device AI technology refers to AI technology that runs on an edge device, and the edge device refers to an electronic device capable of processing data in real time on the device itself. In an embodiment, the image processing device 100 may process an image quality of an image more quickly because the image processing device 100 collects, calculates, and processes information on its own according to the on-device AI technology without passing through a cloud server.

AI technology may consist of machine learning (deep learning) and element technologies using the machine learning. AI technology may be implemented using algorithms. Here, an algorithm or a set of algorithms for implementing AI technology is referred to as a neural network. The neural network may receive input data, perform computations for analysis and classification, and output resulting data.

In an embodiment, the on-device AI technology may be performed by at least one processor included in the image processing device 100. In an embodiment, the on-device AI technology may also be referred to as an on-device learning system.

In an embodiment, the image processing device 100 may obtain a model for processing an image quality of the input image 110 by using the on-device AI technology, obtain a training dataset suitable for the characteristics of the input image 110, and perform transfer learning on the model by using the training dataset. The image processing device 100 may generate a meta model adaptive to the input image 110 by using the on-device AI technology. A meta model is a model that has learned 'how to learn,' and may refer to a neural network model capable of quickly learning or adapting to new data. The technique of enabling the meta model to learn 'how to learn' may be referred to as meta-learning. For example, the meta model may be quickly trained to adapt to the input image 110.

In an embodiment, the image processing device 100 may assess an image quality of an image. An image quality of an image may refer to the quality of the image or the degree of degradation in the image. In an embodiment, the image processing device 100 may evaluate the input image 110 to obtain at least one of compression quality, blur quality, resolution, and noise for the input image 110. In an embodiment, the image processing device 100 may obtain a training dataset that matches characteristics of the input image 110 by assessing the image quality of the input image 110.

In an embodiment, the image processing device 100 may train the meta model by using the training dataset. In an embodiment, the training dataset used in the image processing device 100 may be a small training dataset 20 obtained by condensing a large training dataset 10. In an embodiment, instead of using the large training dataset 10, the image processing device 100 may use the small training dataset 20 having similar characteristics to those of the large training dataset 10. In an embodiment, the small training dataset 20 may consist of fewer images than the large training dataset 10. In an embodiment, the image processing device 100 may train the meta model using the small training dataset 20, thereby reducing the amount of training dataset required for training the meta model on an edge device having limited computational resources and memory resources. In addition, the image processing device 100 may reduce memory usage on the edge device and reduce power consumption for computation.

In the present disclosure, the small training dataset 20 may be referred to as a 'condensed dataset' obtained by condensing the large training dataset 10, or a 'synthetic dataset' synthesized from the large training dataset 10. In the present disclosure, a training dataset being condensed may mean that the number of images included in to the training dataset is reduced and pixels in each of the images are iteratively updated. For example, as the training dataset is condensed, the number of images included in the training dataset may be reduced from 100 to 1. For example, pixels in one (1) image may be iteratively updated so that characteristics of one hundred (100) images included in the training dataset are reflected in the one image. For example, the 100 images may be included in the large training dataset 10, and the one image that is iteratively updated may be included in the small training dataset 20. Moreover, in the present disclosure, images included in the large training dataset 10 or the small training dataset 20 may be high-resolution images.

In an embodiment, the characteristics of the large training dataset 10 may be similar to the characteristics of the small training dataset 20. For example, the characteristics of the 100 images included in the large training dataset 10 may be similar to the characteristics of the 1 image included in the small training dataset 20. In the present disclosure, the characteristics of the large training dataset 10 being similar to those of the small training dataset 20 may mean that the performance of a first neural network model trained with the large training dataset 10 is similar to that of a second neural network model trained with the small training dataset 20. For example, when parameters of the first neural network model trained with the large training dataset 10 are similar to parameters of the second neural network model trained with the small training dataset 20, the performance of the two neural network models may be described as being similar. For example, the parameters of a neural network model may include weights and gradients of the neural network model. For example, when a gradient of the first neural network model is similar to a gradient of the second neural network model, the performance of the two neural network models may be described as being similar.

In the present disclosure, 'similar' may be a concept that includes not only being approximate to each other, but also being identical to each other. In the present disclosure, a neural network model may be an inference network that implements a super-resolution (SR) algorithm capable of upscaling a low-resolution (or LR) image to a high-resolution (or HR) image.

Moreover, in the present disclosure, a condensed high-resolution image in the small training dataset 20 may have different data from a high-resolution image in the large training dataset 10 before condensation. For example, as pixels of a high-resolution image before condensation are iteratively updated, a new image different from the high-resolution image before condensation may be generated. For example, a condensed high-resolution image may have different pixel information, contrast value, brightness information, shape, embedding vectors, etc. from a high-resolution image before condensation. However, in the present disclosure, taking into account that the upscaling performance of the second neural network model trained with condensed high-resolution images in the small training dataset 20 is similar to the upscaling performance of the first neural network model trained with high-resolution images in the large training dataset 10, it may be described that the characteristics of the small training dataset 20 are similar to the characteristics of the large training dataset 10.

In an embodiment, an operation of condensing a training dataset may be performed by a server 1000. The server 1000 may store the large training dataset 10 necessary for training the meta model in the image processing device 100. In an embodiment, the server 1000 may generate the small training dataset 20 based on the large training dataset 10. For example, the server 1000 may generate a condensed HR dataset having condensed high-resolution images, based on high-resolution images included in the large training dataset 10. For example, the small training dataset 20 may correspond to the condensed HR dataset. In an embodiment, the server 1000 may provide necessary data to an edge device in an offline environment. The edge device may collect data from the server 1000 and perform data processing and analysis.

In an embodiment, the server 1000 may generate an initial condensed HR dataset by selecting some of the images included in the large training dataset 10. Here, the initial condensed HR dataset may consist of some images randomly extracted from among the images included in the large training dataset 10. In an embodiment, the server 1000 may generate a condensed HR dataset consisting of condensed images by iteratively updating the initial condensed HR dataset consisting of the randomly extracted images. The server 1000 may generate a condensed HR dataset corresponding to the small training dataset 20 by extracting a small number of images from the large training dataset 10 and performing updates on the small number of images. In an embodiment, the server 1000 may iteratively update the condensed HR dataset so that the characteristics of the condensed HR dataset are similar to the characteristics of the large training dataset 10 corresponding to the high-resolution dataset.

In an embodiment, in order to generate the condensed HR dataset having characteristics similar to characteristics of the large training dataset 10, the server 1000 may approximate the upscaling performance of the second neural network model trained using the condensed HR dataset to the upscaling performance of the first neural network model trained using the large training dataset 10. For example, the server 1000 may adjust parameters of the two neural network models to closely match, so that the upscaling performance of the second neural network model approximates the upscaling performance of the first neural network model. For example, the server 1000 may calculate parameters of the first neural network model and parameters of the second neural network model, and iteratively update the condensed HR dataset so that a difference between the parameters of the first neural network model and the parameters of the second neural network model is minimized.

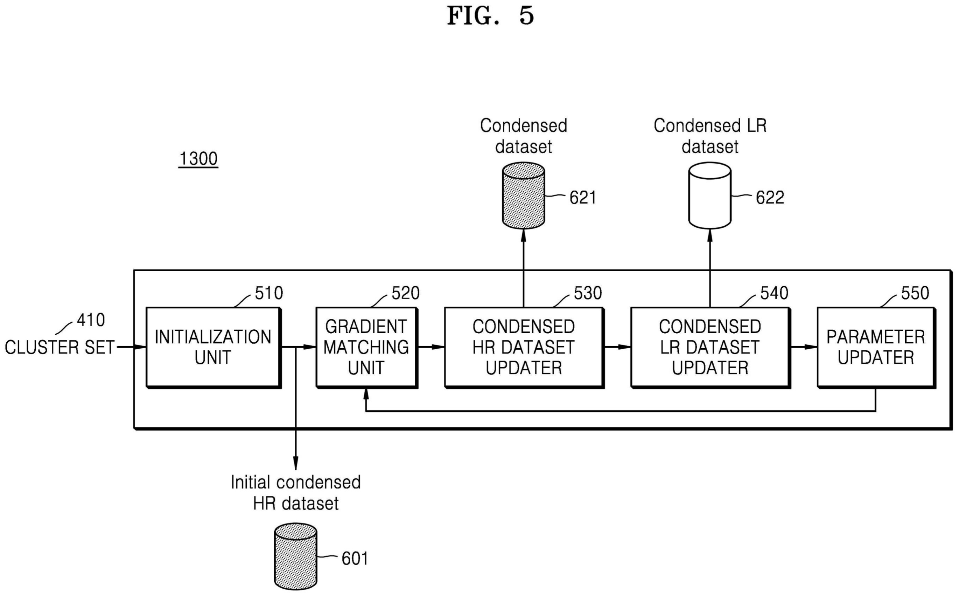

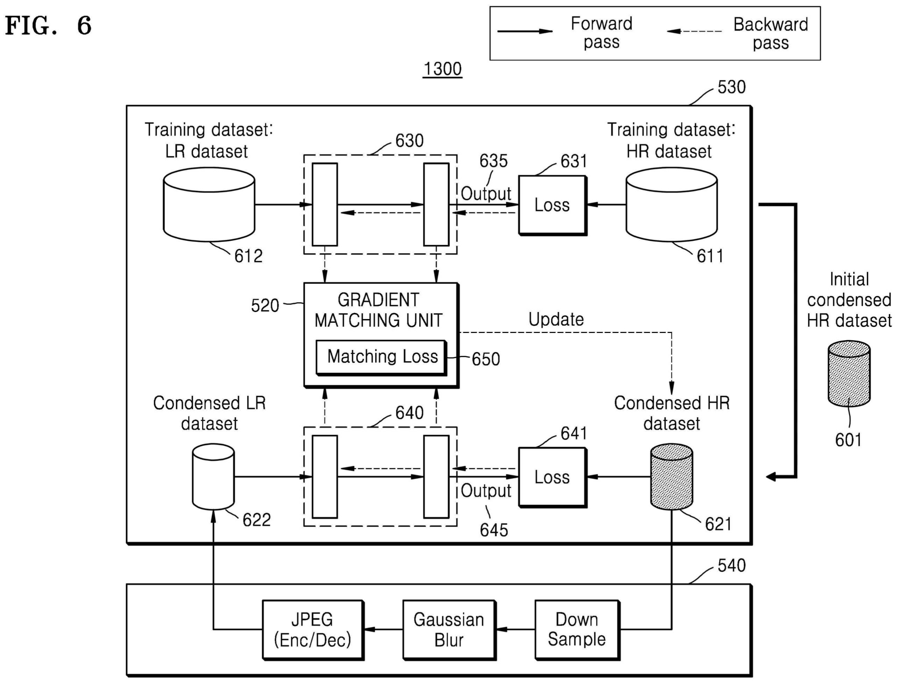

For example, the server 1000 may iteratively update pixels in each of the images in the condensed HR dataset, which is training data for the second neural network model, so that a second gradient of the second neural network model approximates a first gradient of the first neural network model. This is described in detail with reference to FIGS. 5 and 6.

In an embodiment, the server 1000 may generate HR-LR image pairs to train a neural network model using a training dataset. For example, the server 1000 may obtain a low-resolution image with degraded image quality by performing at least one of compression degradation, blurring degradation, resolution adjustment, or noise addition on a high-resolution image. In an embodiment, to train the first neural network model, the server 1000 may generate an LR dataset including low-resolution images by degrading high-resolution images included in the large training dataset 10. The large training dataset 10 may have a higher resolution than the LR dataset. In an embodiment, to train the second neural network model, the server 1000 may generate a condensed LR dataset including condensed low-resolution images by degrading condensed high-resolution images included in the condensed HR dataset. The condensed HR dataset may have a higher resolution than the condensed LR dataset. In an embodiment, each time the condensed HR dataset is updated, the server 1000 may update the condensed LR dataset to correspond to the updated condensed dataset.

In an embodiment, the server 1000 may provide the small training dataset 20 having characteristics similar to those of the large training dataset 10 to the image processing device 100. For example, the server 1000 may provide the image processing device 100 with the condensed HR dataset instead of the large training dataset 10.

In an embodiment, the image processing device 100 may store, in a memory of the image processing device 100, the condensed HR dataset generated by the server 1000. In an embodiment, the image processing device 100 may obtain a condensed HR dataset corresponding to the small training dataset 20 instead of the large training dataset 10. The image processing device 100 may obtain a degraded dataset corresponding to the input image 110 from the condensed HR dataset. For example, the image processing device 100 may obtain a degraded dataset from the condensed HR dataset so that the degraded dataset has an image quality corresponding to an image quality of the input image 110. For example, the image processing device 100 may analyze the input image 110 to obtain the quality of the input image 110 in order to obtain a training dataset suitable for the input image 110. For example, the image processing device 100 may evaluate the input image 110 to obtain at least one of compression quality, blur quality, resolution, and noise for the input image 110. For example, the image processing device 100 may obtain a degraded dataset by performing at least one of compression degradation, blurring degradation, resolution adjustment, or noise addition on the condensed HR dataset. The condensed HR dataset may have a higher resolution than the degraded dataset.

In an embodiment, the image processing device 100 may train a meta model based on the condensed HR dataset and the degraded dataset. The image processing device 100 may train the meta model by updating parameters of the meta model so that a difference between the condensed HR dataset and an output value obtained by applying the degraded dataset to the meta model is minimized. In an embodiment, the performance of the meta model trained using the condensed HR dataset, which is the small training dataset 20, may be similar to the performance of the meta model trained using the large training dataset 10. For example, the parameters of the meta model trained using the condensed HR dataset may be close to or identical to the parameters of the meta model trained using the large training dataset 10.

In an embodiment, instead of training a meta model with the large training dataset 10, the image processing device 100 may train the meta model using the condensed HR dataset corresponding to the small dataset 20. As the image processing device 100 trains the meta model with the condensed HR dataset, the upscaling performance of the meta model may be maintained. Accordingly, the amount of training dataset required for training an AI model for performing upscaling in the image processing device 100 may be reduced, and the amount of external memory usage and power consumption for computation in the image processing device 100 may be reduced.

Alternatively, in an embodiment, the operation of condensing the training dataset may be performed by the image processing device 100. The image processing device 100 may generate a condensed dataset by condensing the training dataset while on-device AI technology is not running. In this case, the image processing device 100 may store a large training dataset and the condensed dataset, which is a small training dataset.

In an embodiment, the image processing device 100 may load a meta model trained using the on-device AI technology and perform image quality processing by applying the input image 110 to the trained meta model to thereby obtain the output image 120 that has been image-quality processed.

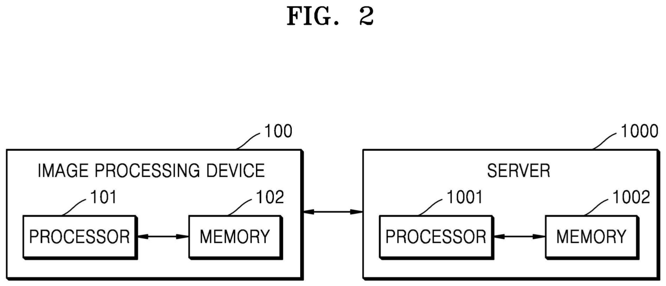

FIG. 2 is block diagram of an image processing device and a block diagram of a server, according to an embodiment.

Referring to FIG. 2, the server 1000 may include a processor 1001 and a memory 1002.

The memory 1002 may store one or more instructions. The memory 1002 may store at least one program executed by the processor 1001. In an embodiment, the memory 1002 may store at least one program for executing an operation of condensing a large training dataset into a small condensed dataset. In an embodiment, the memory 1002 may include an external database (DB) that stores a training dataset for on-device AI operations of the image processing device 100. In an embodiment, the memory 1002 may store a large training dataset, and store a condensed HR dataset to be provided to the image processing device 100. In an embodiment, the memory 1002 may store at least one neural network and/or predefined operating rules or AI models.

The memory 1002 may include at least one type of storage medium from among a flash memory-type memory, a hard disk-type memory, a multimedia card micro-type memory, a card-type memory (e.g., a Secure Digital (SD) card or an eXtreme Digital (xD) memory), random access memory (RAM), static RAM (SRAM), read-only memory (ROM), electrically erasable programmable ROM (EEPROM), PROM, a magnetic memory, a magnetic disc, and an optical disc.

The server 1000 may include one or more processors 1001. The processor 1001 may control all operations of the server 1000. The processor 1001 may execute one or more instructions stored in the memory 1002 to control the server 1000 to perform an operation of condensing a training dataset.

In an embodiment, the processor 1001 may execute one or more instructions to generate a cluster set 410 by clustering a training dataset 310 or 611. The processor 1001 generates an initial condensed HR dataset 601 by selecting, for each cluster in the cluster set 410, some of the images included in each cluster. The processor 1001 obtains a first loss 631 of a first neural network model 630 based on the training dataset 310 or 611, and a second loss 641 of a second neural network model 640 based on the initial condensed HR dataset 601. The processor 1001 generates a condensed HR dataset 621 by updating, based on the first loss 631 and the second loss 641, pixels in each of the images included in the initial condensed HR dataset 601.

In an embodiment, the server 1000 may generate a condensed HR dataset, which is the small training dataset 20 having similar characteristics to those of the large training dataset 10. The number of condensed high-resolution images included in the small training dataset 20 may be less than the number of high-resolution images included in the large training dataset 10. The amount of data in the small training dataset 20 may be less than the amount of data in the large training dataset 10. Accordingly, the amount of training dataset required for training an AI model for performing upscaling in the image processing device 100 may be reduced, and the amount of external memory usage and power consumption for computation in the image processing device 100 may be reduced.

In an embodiment, the processor 1001 may execute one or more instructions to perform preprocessing on the training dataset 310 or 611 based on the amount of information in each of the images included in the training dataset 310 or 611.

In an embodiment, the processor 1001 may execute one or more instructions to generate an LR dataset 612 by performing image quality processing on the training dataset 310 or 611 and generate a condensed LR dataset 622 by performing image quality processing on the condensed HR dataset 621. The processor 1001 may calculate the first loss 631, which is a difference between the training dataset 310 or 611 and an output value 635 obtained by inputting the LR dataset 612 to the first neural network model 630. The processor 1001 may calculate a second loss 641, which is a difference between the condensed HR dataset 621 and an output value 645 obtained by inputting the condensed LR dataset 622 to the second neural network model 640.

In an embodiment, the processor 1001 may execute one or more instructions to calculate a first gradient for minimizing the first loss 631 of the first neural network model 630. The processor 1001 may calculate a second gradient for minimizing the second loss 641 of the second neural network model 640. The processor 1001 may update pixels in each of the images in the condensed HR dataset 621 so that a difference between the first gradient and the second gradient is reduced.

In an embodiment, the processor 1001 may execute one or more instructions to calculate a matching loss 650 which is the difference between the first gradient and the second gradient. The processor 1001 may calculate a matching gradient for minimizing the matching loss 650. The processor 1001 may update the condensed HR dataset 621 by applying a matching gradient to pixels in each of the images within the condensed HR dataset 621. A matching gradient may represent a slope of the matching loss 650 with respect to pixels in each of the images within the condensed HR dataset 621.

The first gradient may represent a slope of the first loss 631 with respect to parameters of the first neural network model 630. The second gradient may represent a slope of the second loss 641 with respect to parameters of the second neural network model 640.

The first loss 631 and/or the second loss 641 may be characterized by not being a mean absolute error.

In an embodiment, the processor 1001 may execute one or more instructions to generate a condensed LR dataset 622 by performing image quality processing on the condensed HR dataset 621.

In an embodiment, the processor 1001 may execute one or more instructions to update the parameters of the second neural network model 640 by applying the updated condensed HR dataset 621 and the condensed LR dataset 622 to the second neural network model 640.

In an embodiment, the processor 1001 may execute one or more instructions to calculate the second loss 641 between the condensed HR dataset 621 and an output value 645 obtained by applying the condensed LR dataset 622 to the second neural network model 640. The processor 1001 may calculate a second gradient for minimizing the second loss 641. The processor 1001 may update the parameters of the second neural network model 640 by applying the second gradient to the parameters of the second neural network model 640. The second gradient may represent a slope of the second loss 641 with respect to the parameters of the second neural network model 640.

Initial parameters of the second neural network model 640 may be characterized as the same as initial parameters of the first neural network model 630.

The parameters of the second neural network model 640 trained using the condensed HR dataset 621 may be characterized as approximating the parameters of the first neural network model 630 trained using the training dataset 310 or 611.

In an embodiment, the processor 1001 may execute one or more instructions to classify the training dataset 310 or 611 based on categories. The processor 1001 may obtain multiple condensed datasets 940 by condensing the training dataset 310 or 611 for each category.

In an embodiment, the processor 1001 may execute one or more instructions to determine, based on a user input, the number of some images to be selected from among images included in each cluster. In an embodiment, the number of the determined images may be equal to the number of images included in the condensed HR dataset 621.

Referring to FIG. 2, the image processing device 100 may include a processor 101 and a memory 102.

The memory 102 may store one or more instructions. The memory 102 may store at least one program executed by the processor 101. The memory 102 may store at least one neural network and/or predefined operating rules or AI models. In addition, the memory 102 may store data input to or output from the image processing device 100.

The memory 102 may include at least one type of storage medium from among a flash memory-type memory, a hard disk-type memory, a multimedia card micro-type memory, a card-type memory (e.g., an SD card or an XD memory), RAM, SRAM, ROM, EEPROM, PROM, a magnetic memory, a magnetic disc, and an optical disc.

In an embodiment, the memory 102 may store a condensed HR dataset corresponding to a training dataset.

In an embodiment, the memory 102 may store a plurality of condensed HR datasets obtained by respectively condensing training datasets having categories corresponding to categories of input images. In an embodiment, the memory 102 may store a plurality of condensed HR datasets obtained by respectively condensing training datasets having the same type of content as input images. In an embodiment, the multiple condensed HR datasets may be referred to as multiple condensed datasets.

In an embodiment, the memory 102 may store high-quality images obtained by condensing high-quality images in the training dataset for each cluster included in a cluster set.

In an embodiment, a plurality of reference models may be stored in the memory 102. The plurality of reference models may be image quality processing models pre-trained with training images having different quality values. In an embodiment, the memory 102 may store, together with the reference models, quality values of training images used to train each of the plurality of reference models.

The processor 101 may include one or more processors. The processor 101 may control all operations of the image processing device 100. The processor 101 may control the image processing device 100 to function by executing one or more instructions stored in the memory 102.

In an embodiment, the processor 101 may execute one or more instructions to obtain a meta model for image quality processing of the input image 110. In an embodiment, the processor 101 may obtain the condensed HR dataset 621 corresponding to the training dataset 310 or 611. In an embodiment, the processor 101 can obtain a degraded dataset 1302 from the condensed HR dataset 621 or 940 by using the input image 110. In an embodiment, the processor 101 may obtain the output image 120, which has been image-quality processed, based on the meta model trained using the condensed HR dataset 621 and the degraded dataset 1302.

In an embodiment, the characteristics of the condensed HR dataset, which is a small training dataset, may be similar to the characteristics of the large training dataset 10. In other words, even when the image processing device 100 trains the meta model using the condensed HR dataset instead of the large training dataset 10, the upscaling performance of the image processing device 100 may be maintained. Accordingly, the amount of training dataset required for training an AI model for performing upscaling in the image processing device 100 may be reduced, and the amount of external memory usage and power consumption for computation in the image processing device 100 may be reduced.

In an embodiment, the processor 101 may execute one or more instructions to obtain the degraded dataset 1302 by degrading the condensed HR dataset 621 to have an image quality corresponding to an image quality of the input image 110.

In an embodiment, the processor 101 may execute one or more instructions to identify a category of the input image 110. In an embodiment, the processor 101 may execute one or more instructions to obtain a condensed HR dataset corresponding to the same category as the input image 110 from among multiple condensed datasets 940 obtained by condensing the training datasets 310 or 611 by category.

In an embodiment, the processor 101 may execute one or more instructions to identify a type of content of the input image 110 through metadata of the input image 110. In an embodiment, the processor 101 may execute one or more instructions to obtain a condensed HR dataset corresponding to the same type of content as the input image 110 from among multiple condensed datasets 960 obtained by condensing the training datasets 310 or 611 by type of content.

In an embodiment, parameters of the meta model trained using the condensed HR dataset 621 and the degraded dataset 1302 may approximate the parameters of the meta model trained using the training dataset 310 or 611 and the LR dataset 612 degraded from the training dataset 310 or 611.

In an embodiment, a condensed HR dataset may include high-quality images obtained by condensing high-quality images in a training dataset for each cluster included in a cluster set.

In an embodiment, the processor 101 may execute one or more instructions to receive, from a streaming server 2000, an input image and a condensed dataset corresponding to the input image. In an embodiment, the processor 101 may obtain a dataset corresponding to a category of the input image from the condensed dataset received from the streaming server 2000 and a condensed HR dataset.

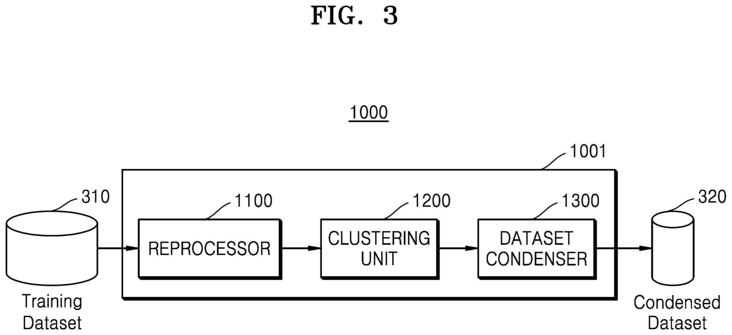

An operation in which the server 1000 condenses a training dataset, according to an embodiment, is described below with reference to FIGS. 3 to 10.

FIG. 3 is an internal block diagram of a processor of a server, according to an embodiment.

Referring to FIG. 3, the processor 1001 of the server 1000 may include a preprocessor 1100, a clustering unit 1200, and a dataset condenser 1300. The processor 1001 may perform operations of the preprocessor 1100, the clustering unit 1200, and the dataset condenser 1300 by executing one or more instructions stored in the memory 1002. In an embodiment, the processor 1001 may generate a condensed dataset 320 based on the training dataset 310. The training dataset 310 may correspond to the large training dataset 10 of FIG. 1 and include high-resolution images.

In an embodiment, the preprocessor 1100 may perform preprocessing on the training dataset 310 based on the amount of information in each of the high-resolution images included in the training dataset 310. The preprocessor 1100 may remove, in advance, images that have little effect on improving the upscaling performance of a neural network model from among the high-resolution images included in the training dataset 310. For example, the preprocessor 1100 may measure the amount of information in each of the high-resolution images included in the training dataset 310 and distinguish between texture data with a low contrast value and edge data with a high contrast value. Texture data refers to complex data with a low contrast and a large amount of information, while edge data refers to data with a high contrast and a small amount of information. The preprocessor 1100 may remove, in advance, texture data that has little effect on improving the upscaling performance of the neural network model from the high-resolution images included in the training dataset 310.

In an embodiment, the preprocessor 1100 may distinguish between high-resolution images including texture data from high-resolution images including edge data by measuring statistical characteristics of high-resolution images and then removing high-resolution images whose measured values are less than or equal to a certain value. Alternatively, in an embodiment, the preprocessor 1100 may distinguish between high-resolution images including texture data and high-resolution images including edge data by measuring statistical characteristics of high-resolution images, arranging the measured values in order of size, and removing images corresponding to the bottom N values (N is an arbitrary natural number).

In an embodiment, the preprocessor 1100 may be omitted.

In an embodiment, the clustering unit 1200 may generate a cluster set by clustering the preprocessed training dataset 310. In order to efficiently condense the training dataset 310, the server 1000 may not condense the entire training dataset at once, but may group high-resolution images having similar characteristics into clusters and then perform condensation on each cluster. In an embodiment, the server 1000 may obtain a condensed HR dataset by condensing high-resolution images included in each cluster in the cluster set.

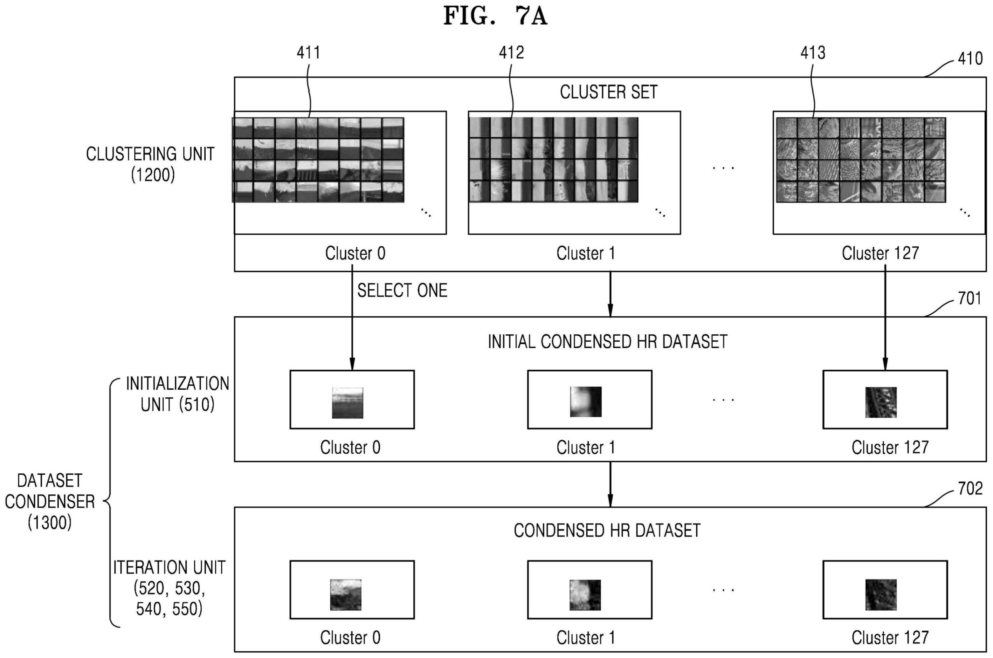

In an embodiment, the clustering unit 1200 may cluster the training dataset 310 based on pixel information, contrast values, brightness information, shapes, embedding vectors, etc. of high-resolution images included in the training dataset 310. For example, the clustering unit 1200 may group high-resolution images from the training dataset 310 into clusters, each including high-resolution images with similar pixel information, contrast values, brightness information, shapes, embedding vectors, etc. For example, as shown in FIG. 7A, the clustering unit 1200 may group images with edge data into one cluster and images with texture data another cluster.

In an embodiment, the clustering unit 1200 may cluster the training dataset 310 by using a general algorithm, such as a K-means clustering algorithm. In an embodiment, the number of clusters included in a cluster set may be determined based on a user input. For example, the clustering unit 1200 may cluster, based on a user input, the training dataset into k clusters, each having i high-resolution images (i and k are natural numbers). For example, the clustering unit 1200 may group the training dataset into 128 clusters, each having 100 high-resolution images.

In an embodiment, the clustering unit 1200 may be omitted.

In an embodiment, the dataset condenser 1300 may generate the condensed dataset 320 based on the training dataset 310. In an embodiment, the dataset condenser 1300 may generate the condensed dataset 320 having condensed high-resolution images by condensing the high-resolution images included in the training dataset 310.

In an embodiment, the dataset condenser 300 may condense the cluster set clustered by the clustering unit 1200. The dataset condenser 1300 may individually perform condensation for each of the clusters included in the cluster set. The dataset condenser 1300 may generate condensed high-resolution images by condensing high-resolution images included in each cluster on a cluster-by-cluster basis.

In an embodiment, the dataset condenser 1300 may determine, based on a user input, the number of condensed high-resolution images to be included in an initial condensed HR dataset from among high-resolution images included in each cluster. In an embodiment, the user may select m high-resolution images from among i high-resolution images included in each cluster. The dataset condenser 1300 may generate the initial condensed HR dataset with m high-resolution images selected from among i high-resolution images included in each cluster. The dataset condenser 1300 may generate a condensed HR dataset having m condensed high-resolution images for each cluster through iterative updates of the initial condensed HR dataset having m high-resolution images for each cluster. For example, the dataset condenser 1300 may perform condensation for 128 clusters cluster-by cluster, each cluster having 100 high-resolution images (i=100). For example, a user may determine that one condensed high-resolution image (m=1) is generated for each cluster having 100 high-resolution images. For example, the dataset condenser 1300 may condense 100 high-resolution images included in each cluster into 1 condensed high-resolution image. For example, the dataset condenser 1300 may generate the condensed dataset 320 having 128 condensed high-resolution images by condensing the training dataset 310 consisting of 12,800 high-resolution images into 128 high-resolution images, that is, one image for each of the 128 clusters. In an embodiment, the dataset condenser 1300 may reduce the number of high-resolution images included in each cluster by condensing each cluster.

In an embodiment, the dataset condenser 1300 may perform an initialization operation. In an embodiment, the dataset condenser 1300 may generate an initial condensed HR dataset by selecting some of the images included in the training dataset 310. In an embodiment, the dataset condenser 1300 may generate an initial condensed HR dataset by selecting some images for each cluster included in the cluster set. In an embodiment, the dataset condenser 1300 may generate an initial condensed HR dataset with m high-resolution images for each cluster by extracting m high-resolution images for each cluster from the training dataset 310.

In an embodiment, the dataset condenser 1300 may generate a condensed LR dataset by degrading the condensed HR dataset. In an embodiment, the dataset condenser 1300 may generate a condensed LR dataset by performing at least one of compression degradation, blurring degradation, resolution adjustment, or noise addition on the condensed HR dataset. In an embodiment, the condensed LR dataset may include low-resolution images with a lower resolution than the high-resolution images included in the condensed HR dataset. In an embodiment, the dataset condenser 1300 may obtain, based on the training dataset 310, condensed HR-condensed LR image pairs which are training data for training the second neural network model. For example, the second neural network model may be an inference network that implements an SR algorithm capable of converting a low-resolution image into a high-resolution image.

In addition, in an embodiment, the dataset condenser 1300 may generate an LR dataset by degrading the training dataset through the initialization operation. In an embodiment, the dataset condenser 1300 may obtain, based on the training dataset 310, HR-LR image pairs which are training data for training the first neural network model. For example, the first neural network model is an inference network that implements an SR algorithm capable of converting a low-resolution image into a high-resolution image. For example, the first neural network model and the second neural network model may be one neural network model with identical parameters but which is trained with different training data.

In an embodiment, the dataset condenser 1300 may update a condensed HR dataset by comparing the first neural network model trained using the training dataset 310 with the second neural network model trained using the condensed HR dataset. In an embodiment, the dataset condenser 1300 may obtain the condensed dataset 320 including the updated condensed HR dataset.

In an embodiment, the dataset condenser 1300 may iteratively update the condensed HR dataset so that the performance of the first neural network model trained with the training dataset 310 is similar to the performance of the second neural network model trained with the condensed HR dataset. In an embodiment, the dataset condenser 1300 may calculate a first gradient by applying the training dataset 310 to the first neural network model, and a second gradient by applying the condensed HR dataset to the second neural network model.

Here, a gradient of a neural network model represents a slope of a loss function, which is a derivative of the loss function with respect to parameters of the neural network model. The gradient may be used in a gradient descent algorithm to adjust the parameters of the neural network model in a direction in which the loss function of the neural network model is minimized. For example, a direction of the gradient indicates a direction in which the parameters should move to minimize the loss function, and a magnitude of the gradient may indicate how much the parameters should be updated.

For example, the first gradient may represent a slope of a first loss with respect to parameters of the first neural network model. The second gradient may represent a slope of a second loss with respect to parameters of the second neural network model.

In an embodiment, the dataset condenser 1300 may update pixels in images within the condensed HR dataset, based on the first gradient and the second gradient. In an embodiment, the dataset condenser 1300 may calculate a matching loss, which is a difference between the first gradient of the first neural network model and the second gradient of the second neural network model. In an embodiment, the dataset condenser 1300 may adjust pixels in the condensed HR dataset in a direction in which the matching loss is minimized. For example, the dataset condenser 1300 may calculate a matching gradient for minimizing the matching loss. For example, a matching gradient may represent a slope of the matching loss with respect to pixels in each of the images within the condensed HR dataset. In a manner similar to a gradient descent algorithm, a matching gradient may be used to adjust pixels in the images within the condensed HR dataset in a direction in which the matching loss is minimized. For example, using a matching gradient may be similar to the way in which a gradient represents a slope of a loss with respect to parameters of a neural network model and is used to adjust the parameters of the neural network model in a direction in which the loss is minimized by using the gradient descent algorithm.

In an embodiment, the dataset condenser 1300 may calculate pixels in images included in the condensed HR dataset, which are updated via a matching gradient to minimize the matching loss. The dataset condenser 1300 may update pixels in images in the condensed HR dataset through a matching gradient. In an embodiment, the dataset condenser 1300 may generate a condensed HR dataset, which is a small training dataset having similar characteristics to those of the large training dataset 310.

In an embodiment, the performance of a neural network model may be similar both in the case of training a meta model using a dataset consisting of 256 high-quality images of 32x32 size and in the case of training the same meta model using a condensed HR dataset consisting of 64 condensed high-quality images of 32x32 size. As a result, memory usage may be reduced by about 4 times, and the amount of computation required to update the neural network model may also be reduced by about 4 times. The above-described numerical values are provided as examples for convenience of description, and are not limited thereto.

By generating, by the server 1000 according to an embodiment, a condensed HR dataset, which is a small training dataset having characteristics similar to those of the large training dataset 310, the memory usage for training data required for the image processing device 100 to train the meta model may be reduced. In an embodiment, even when the image processing device 100 trains the meta model using a small training dataset instead of a large training dataset, the upscaling performance of the image processing device 100 may be maintained. Accordingly, the amount of training dataset required for training an AI model for performing upscaling in the image processing device 100 may be reduced, and the amount of external memory usage and power consumption for computation in the image processing device 100 may be reduced.

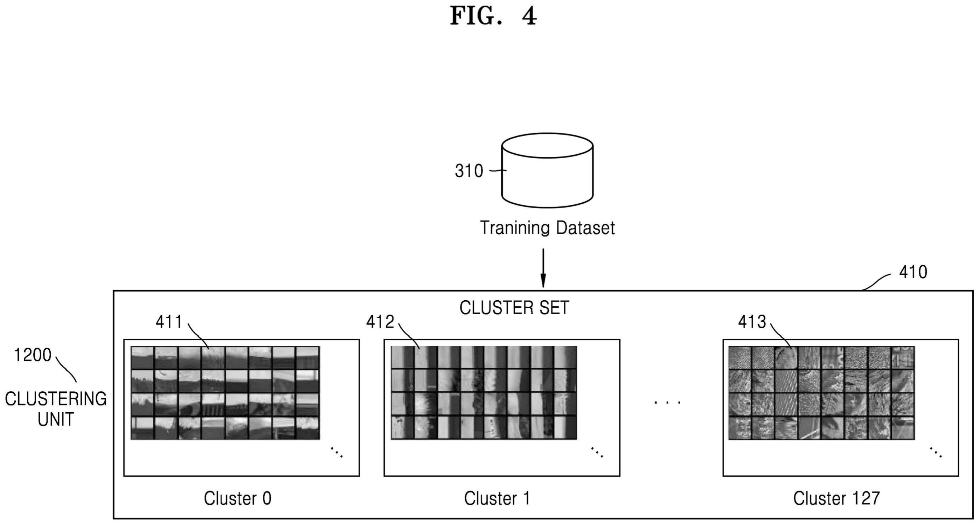

FIG. 4 is a diagram illustrating a training dataset clustered according to a clustering operation of a server, according to an embodiment.

Referring to FIG. 4, the server 1000 may preprocess the training dataset 310 including hundreds of thousands of high-resolution images via the preprocessor 1100. The server 1000 may cluster, via the clustering unit 1200, the training dataset 310 into 128 clusters, each having 100 high-resolution images. By clustering the training dataset 310, the server 1000 may generate the cluster set 410 having high-resolution images for each cluster.

For example, the cluster set 410 may include Cluster 0 411, Cluster 1 412, ..., and Cluster 127 413. Cluster 0 411 may have 100 high-resolution images with similar characteristics among the high-resolution images included in the training dataset 310. Cluster 1 412 may have 100 high-resolution images with similar characteristics among the high-resolution images included in the training dataset 310. Cluster 127 413 may have 100 high-resolution images with similar characteristics among the high-resolution images included in the training dataset 310.

The server 1000 may cluster the high-resolution images included in the training dataset 310 according to statistical characteristics of high-resolution images via the clustering unit 1200. For example, in FIG. 4, Cluster 0 411 may include high-resolution images containing horizontal edge data, Cluster 1 412 may include high-resolution images containing vertical edge data, and Cluster 127 413 may include high-resolution images containing texture data.

Moreover, the number of clusters included in the cluster set 410 may vary depending on a user input and is not limited to 128. In addition, the number of high-resolution images included in each cluster is an example for convenience of description, and is not limited to 100.

The server 1000 may provide the cluster set 410 corresponding to the clustered training dataset 310 to the dataset condenser 1300.

FIG. 5 is an internal block diagram illustrating a dataset condensing unit of a server, according to an embodiment. FIG. 6 is a diagram illustrating an operation in which a server condenses a training dataset, according to an embodiment. In the present disclosure, the training dataset 611 may correspond to the large training dataset 10 in FIG. 1 or the training dataset 310 in FIG. 3. Furthermore, the training dataset 611 may correspond to the cluster set 410 in which images included in the training dataset 611 are grouped cluster-by-cluster. In addition, the condensed HR dataset 621 may correspond to the small training dataset 20 in FIG. 1 or the condensed dataset 320 in FIG. 3. Moreover, in the present disclosure, because the training dataset 611 has higher resolution images than images included in the LR dataset 612, it may also be referred to as an 'HR dataset'.

Referring to FIGS. 5 and 6, the dataset condenser 1300 of the server 1000 may include an initialization unit 510, a gradient matching unit 520, a condensed HR dataset updater 530, a condensed LR dataset updater 540, and a parameter updater 550. The gradient matching unit 520, the condensed HR dataset updater 530, the condensed LR dataset updater 540, and the parameter updater 550 operate iteratively, and they may therefore be referred to as an iteration unit.

In an embodiment, the initialization unit 510 may perform a first initialization operation for generating the initial condensed HR dataset 601 based on the training dataset 611. The initialization unit 510 may perform a second initialization operation for obtaining HR-LR image pairs by obtaining an initial condensed LR dataset based on the initial condensed HR dataset 601 and obtaining the LR dataset 612 based on the training dataset 611. The initialization unit 510 may perform a third initialization operation for initializing parameters of a neural network model.

In an embodiment, by performing the first initialization operation, the initialization unit 510 may generate the initial condensed HR dataset 601 based on the training dataset. In an embodiment, the initialization unit 510 may generate the initial condensed HR dataset 601 by selecting some of the images included in the training dataset 611. The initialization unit 510 may initialize the condensed HR dataset 621.

In an embodiment, the initialization unit 510 may determine, based on a user input, the number of condensed high-resolution images from among high-resolution images included in each cluster. In an embodiment, the user may select m high-resolution images (m is a natural number) from among i high-resolution images included in each cluster. The initialization unit 510 may generate the initial condensed HR dataset 601 by using m high-resolution images randomly selected from among i high-resolution images included in each cluster.

In an embodiment, when the initial condensed HR dataset 601 is determined to have m high-resolution images for each cluster, the number of final condensed high-resolution images for each cluster may be determined. For example, the initialization unit 510 may perform condensation for 128 clusters cluster-by-cluster, each cluster having 100 high-resolution images (i=100). For example, the user may determine, for each cluster , the number of condensed high-resolution image to be included in the initial condensed HR dataset 601 (e.g., m=1). For example, the initialization unit 510 may condense 100 high-resolution images included in each cluster into 1 condensed high-resolution image. For example, the initialization unit 510 may cluster the training dataset 611 consisting of 12,800 high-resolution images into 128 clusters, and condense 100 high-resolution images included in each cluster into one high-resolution image for each cluster, thereby generating the initial condensed HR dataset 601 having 128 condensed high-resolution images. For example, one condensed high-resolution image with similar characteristics to 100 high-resolution images may be generated for each cluster, thereby reducing the number of data.

In an embodiment, by performing the second initialization operation, the initialization unit 510 may generate HR-LR image pairs, which are training data for training the neural network model. In an embodiment, the initialization unit 510 may obtain the LR dataset 612 by degrading the training dataset 611. In an embodiment, the initialization unit 510 may obtain the LR dataset 612 generated by degrading the training dataset 611. In an embodiment, the initialization unit 510 may obtain the condensed LR dataset 622 generated by degrading the condensed HR dataset 621. In an embodiment, the degradation processing may include at least one of compression degradation, blurring degradation, down sampling, or noise addition on an image. In an embodiment, the compression degradation includes a process of encoding/decoding the image, and a still image may be degraded using a JPEG compression method.

In an embodiment, by performing the third initialization operation, the initialization unit 510 may initialize the parameters of the neural network model. For example, the neural network model may be an inference network capable of upscaling a low-resolution image to a high-resolution image. For example, the parameters of the neural network model may include weights, gradients, biases, etc. In the present disclosure, the first neural network model 630 trained using the training dataset and the second neural network model 640 trained using the condensed dataset may be the same neural network model derived from a single neural network model. In FIG. 6, each of the first neural network model 630 and the second neural network model 640 is briefly illustrated as having two layers, but is not limited thereto.

In an embodiment, the gradient matching unit 520, the condensed HR dataset updater 530, the condensed LR dataset updater 540, and the parameter updater 550 may operate iteratively so that the parameters of the second neural network model 640 trained with the condensed dataset approximate the parameters of the first neural network model 630 trained with the training dataset.

In an embodiment, the gradient matching unit 520 may match the second gradient of the second neural network model 640 to the first gradient of the first neural network model 630 such that the performance of the second neural network model 640 trained with the condensed HR dataset 621 is similar to the performance of the first neural network model 630 trained with the training dataset 611.

In an embodiment, the gradient matching unit 520 may calculate the first gradient by applying the training dataset 611 and the LR dataset 612 to the first neural network model 630. In an embodiment, the gradient matching unit 520 may calculate the second gradient by applying the condensed HR dataset 621 and the condensed LR dataset 622 to the second neural network model 640.

In an embodiment, a gradient of the neural network model may be used in a gradient descent algorithm. Gradient descent is an optimization algorithm for finding a first-order approximation, which involves obtaining a gradient (slope) of a loss function by differentiating the loss function with respect to parameters of the neural network model, and finding a parameter (x value) at which the loss function (y value) has a minimum value by continuously moving an x value in the direction of a lower absolute value of the gradient. In an embodiment, a gradient of the neural network model may be applied to update the parameters of the neural network model via a backward pass.

For example, the parameters of the neural network model may be updated via Equation 1.

[Equation 1]

$$w_{(t+1)} = w_t - lr * \frac{\partial Loss}{\partial w}$$

In Equation 1, $W_{(t+1)}$ is an updated parameter of the neural network model, $w_t$ is a current parameter of the neural network model, lr is a learning rate, Loss is a loss function, and $\frac{\partial Loss}{\partial w}$ is a gradient, which is a slope of the loss function Loss with respect to parameters w of the neural network model. The gradient is a derivative of the loss function Loss with respect to the parameters w of the neural network model. A direction of the gradient may indicate a direction in which the parameters w should move to minimize the loss function Loss, and a magnitude of the gradient may indicate how much the parameters w should be updated. Each parameter of the neural network model may be calculated by reflecting the gradient in a current parameter of the neural network model.

For example, the gradient matching unit 520 may obtain the first loss 631 by calculating a difference between the training dataset 611 and the output value 635 obtained by applying the LR dataset 612 to the first neural network model 630. The gradient matching unit 520 may calculate the first gradient by differentiating the first loss 631 with respect to the parameters of the first neural network model 630. The gradient matching unit 520 may calculate the first gradient for minimizing the first loss 631. The gradient matching unit 520 may update the parameters of the first neural network model 630 by reflecting the calculated first gradient in the parameters of the first neural network model 630. For example, the gradient matching unit 520 may obtain the second loss 641 by calculating a difference between the condensed HR dataset 621 and the output value 645 obtained by applying the condensed LR dataset 622 to the second neural network model 640. The gradient matching unit 520 may obtain the second gradient by differentiating the second loss 641 with respect to the parameters of the second neural network model 640. The gradient matching unit 520 may calculate the second gradient for minimizing the second loss 641. The gradient matching unit 520 may update the parameters of the second neural network model 640 by reflecting the calculated second gradient in the parameters of the second neural network model 640. Moreover, the initial parameters of the first neural network model 630 may be the same as the initial parameters of the second neural network model 640.

In an embodiment, the gradient matching unit 520 may update the condensed HR dataset 621, based on the first gradient and the second gradient. In an embodiment, the gradient matching unit 520 may calculate the matching loss 650, which is the difference between the first gradient and the second gradient. For example, the gradient matching unit 520 may calculate a matching gradient such that the matching loss 650 is minimized. In a manner similar to a gradient descent algorithm, a matching gradient may be used to adjust pixels in the images within the condensed HR dataset 621 in a direction in which the matching loss 650 is minimized.

For example, the condensed HR dataset 621 may be updated via Equation 2.

[Equation 2]

$$p_{(t+1)} = p_t - lr * \frac{\partial (Mathcing\ \ Loss)}{\partial p}$$

In Equation 2, $p_{(t+1)}$ is an updated pixel value of an image in the condensed HR dataset 621, pt is a current pixel value of the image in the condensed HR dataset 621, lr is a learning rate, Matching Loss is the matching loss 650, and $\frac{\partial (Mathcing\ \ Loss)}{\partial p}$ is a matching gradient, which is a slope of the matching loss 650 with respect to a pixel value p of the image in the condensed HR dataset 621. The matching gradient is a value obtained by differentiating the matching loss 650 with respect to the pixel value p of the image in the condensed HR dataset 621. A direction of the matching gradient may indicate a direction in which the pixel value p of the image in the condensed HR dataset 621 should move to minimize the matching loss 650, and a magnitude of the matching gradient may indicate how much the pixel value p of the image in the condensed HR dataset 621 should be updated. Each pixel value of an image in the condensed HR dataset 621 may be calculated by reflecting the matching gradient in a current pixel value of the image in the condensed HR dataset 621.

In an embodiment, the gradient matching unit 520 may obtain a matching gradient of the matching loss 650 by differentiating the matching loss 650 with respect to pixels in images within the condensed HR dataset 621, and obtain a pixel (x value) in the condensed HR dataset 621 at which a matching loss (y value) has a minimum value by moving an x value in the direction of a lower absolute value of the matching gradient. In an embodiment, the gradient matching unit 520 may update pixel values of the images in the condensed HR dataset 621 by reflecting the matching gradient in pixels of the images. In an embodiment, the matching gradient may be applied to update the pixel values of the condensed HR dataset 621 via a backward pass.

In addition, in an embodiment, a size of the matching gradient may be equal to the number of pixels in each of the images in the condensed HR dataset 621. For example, when the number of pixels is 10x10, the size of the matching gradient may be the same as 10x10.

In an embodiment, the condensed HR dataset updater 530 may update the condensed HR dataset 621 based on the matching gradient. In an embodiment, the condensed HR dataset updater 530 may obtain pixel values (x values) in the condensed HR dataset 621 to be updated by moving in a direction where the matching gradient (y value) decreases so that the matching loss 650 is minimized. In an embodiment, the condensed HR dataset updater 530 may generate the condensed HR dataset 621 including images having updated pixels by reflecting the matching gradient in current pixels of the images in the condensed HR dataset 621. For example, the condensed HR dataset updater 530 may update pixels of the images in the condensed HR dataset 621 by adding a value obtained by multiplying the matching gradient by a learning rate to the pixels of the images in the condensed HR dataset 621.

In an embodiment, when the matching loss 650, which is the difference between the first gradient and the second gradient, is minimized, the upscaling performance of the second neural network model 640 may be similar to the upscaling performance of the first neural network model 630.

In an embodiment, the matching gradient is a gradient that is obtained by differentiating, with respect to pixels of an image, a gradient obtained by differentiating the loss functions 631 and 641 with respect to the parameters of the neural network models, and therefore, it may be a gradient obtained by differentiating the loss functions twice. The matching gradient may also be expressed via Mathematical Expression 1 below.

[Mathematical Expression 1]

$$\frac{\partial(Mathcing\ \ Loss)}{\partial p} = \frac{\partial}{\partial p}\left(\frac{\partial Loss1}{\partial w1} - \frac{\partial Loss2}{\partial w2}\right)$$

In Mathematical Expression 1, $\frac{\partial Loss1}{\partial w1}$ represents the first gradient, which is the slope of the first loss 631, and $\frac{\partial Loss2}{\partial w2}$ represents the second gradient, which is the slope of the second loss 641.

Generally, a loss function may be a mean absolute error (MAE), which takes an absolute value, or a mean squared error (MSE), which takes a squared value. However, in an embodiment, the server 1000 needs to calculate the matching gradient obtained by differentiating the loss functions twice in order to update the condensed HR dataset 621. Therefore, according to an embodiment, it may be desirable to apply the MSE instead of the MAE as a loss function of the neural network model. Therefore, according to an embodiment, the loss function of the neural network model may not be the MAE.

In an embodiment, the condensed HR dataset 621 obtained through the condensed HR dataset updater 530 may be different from the initial condensed HR dataset 601 obtained through the initialization unit 510. For example, high-quality images included in the condensed HR dataset 621 obtained through the condensed HR dataset updater 530 may differ from high-quality images included in the initial condensed HR dataset 601 obtained through the initialization unit 510 in terms of any one of pixel information, contrast value, brightness information, shape, or embedding vector.

In an embodiment, the condensed LR dataset updater 540 may update the condensed LR dataset 622 by degrading the updated condensed HR dataset 621. In an embodiment, the condensed LR dataset updater 540 may obtain the condensed LR dataset 622 by performing at least one of compression degradation, blurring degradation, resolution adjustment (e.g., downsampling), or noise addition on the condensed HR dataset 621. In an embodiment, the condensed LR dataset updater 540 includes an encoding/decoding process and may compress and degrade still images by using a JPEG compression method.

In an embodiment, the parameter updater 550 may update the parameters of the second neural network model 640 by applying the updated condensed HR dataset 621 and the updated condensed LR dataset 622 to the second neural network model 640. In an embodiment, the parameter updater 550 may calculate the second loss 641 which is difference between the updated condensed HR dataset 621 and the output value obtained by applying the updated condensed LR dataset 622 to the second neural network model 640. In an embodiment, the parameter updater 550 may calculate the second gradient for the parameters of the second neural network model 640 based on the second loss 641 and update the parameters of the second neural network model 640. In an embodiment, the parameter updater 550 may update the parameters so that the second loss 641 is minimized. In an embodiment, the parameter updater 550 may train the second neural network model 640 by updating the parameters of the second neural network model 640.

Moreover, in an embodiment, the parameters of the second neural network model 640 may also be used to update the parameters of the first neural network model 630. For example, the parameters of the first neural network model 630 may be updated with the parameters of the second neural network model 640 without being updated with parameters based on the training dataset.

In an embodiment, the server 1000 may repeat the process of updating the second neural network model 640 and the process of updating the condensed HR dataset 621. In an embodiment, the server 1000 may obtain the second gradient by differentiating the second loss 641 of the second neural network model 640 with respect to the parameters of the second neural network model 640, and update the second neural network model 640 by obtaining parameters for minimizing the second loss 641. In an embodiment, the server 1000 may obtain a matching gradient by differentiating the matching loss 650 with respect to the condensed HR dataset 621, and obtain updated pixel values of an image in the condensed HR dataset so that the matching loss 650 is minimized.

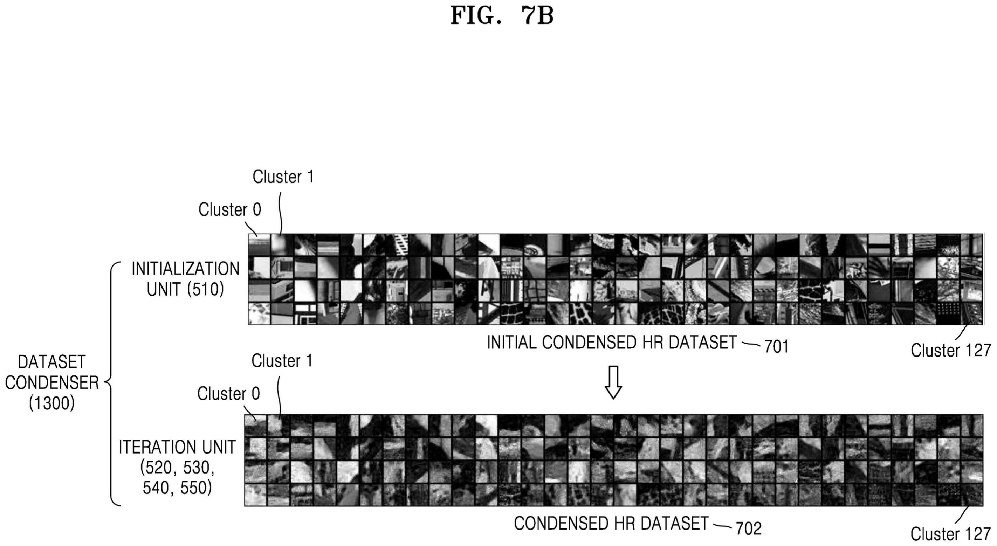

FIG. 7A is a diagram illustrating an initial condensed high-resolution (HR) dataset and a condensed HR dataset obtained according to a condensation operation of a server, according to an embodiment. FIG. 7B is a detailed diagram illustrating an initial condensed HR dataset and a condensed HR dataset obtained according to a condensation operation of a server, according to an embodiment.

Referring to FIG. 7A, the server 1000 may cluster preprocessed high-resolution images in a training dataset via the clustering unit 1200. The server 1000 may generate the cluster set 410 clustered into 128 clusters 411, 412, and 413, each having 100 high-resolution images (see FIG. 4). The server 1000 may generate, via the dataset condenser 1300, the condensed HR dataset 702 including a condensed high-resolution image for each of the clusters 411, 412, and 413 included in the cluster set 410.

The server 1000 may generate the initial condensed HR dataset 701 from the clusters 411, 412, and 413 included in cluster set 410 via the initialization unit 510. The server 1000 may determine, based on a user input, the number (m) of high-resolution images to be used to construct the initial condensed HR dataset 701 for each of the clusters 411, 412, and 413. The server 1000 may generate, via the iteration unit 520, 530, 540, and 550, the condensed HR dataset 702 having a number of condensed high-resolution images equal to the number of high-resolution images in the initial condensed HR dataset 701.

The server 1000 may select, for each of the 128 clusters 411, 412, and 413, one initial high-resolution image (m=1) from among 100 high-resolution images included in each cluster 411, 412, or 413. The server 1000 may generate, via the initialization unit 510, the initial condensed HR dataset 701 having one initial high-resolution image for each cluster 411, 412, or 413. For example, the initial condensed HR dataset 701 may have 128 initial high-resolution images respectively included in the 128 clusters, as shown in FIG. 7B.

The server 1000 may generate one condensed high-resolution image by iteratively updating one initial high-resolution image for each of the 128 clusters 411, 412, and 413. The server 1000 may generate, via the iteration unit, the condensed HR dataset 702 with 128 condensed high-resolution images by updating the 128 initial high-resolution images included in the initial condensed HR dataset 701. For example, the condensed HR dataset 702 may have 128 condensed high-resolution images respectively included in 128 clusters, as shown in FIG. 7B. For example, the server 1000 may extract one initial condensed high-resolution image from 100 high-resolution images included in Cluster 0 411 and generate one condensed high-resolution image via iteration. For example, parameters of the second neural network model 640 trained with one condensed high-resolution image may approximate parameters of the first neural network model 630 trained with 100 high-resolution images included in Cluster 0 411.

In an embodiment, high-resolution images included in the cluster set 410 may include images that match the initial condensed high-resolution images generated via the initialization unit 510. Because the server 1000 generates the initial condensed high-resolution images by selecting some of the high-resolution images included in the cluster set 410, the initial condensed high-resolution images may match high-resolution images included in the cluster set 410.

On the other hand, in an embodiment, an initial condensed high-resolution image may have data different from a condensed high-resolution image obtained via the iteration unit. Because the server 1000 updates pixels of the initial condensed high-resolution image via the iteration unit, the condensed high-resolution image may be different from the initial condensed high-resolution image. For example, the condensed high-resolution image may differ from the initial high-resolution image in terms of pixel information, contrast values, brightness information, shape, embedding vectors, etc.

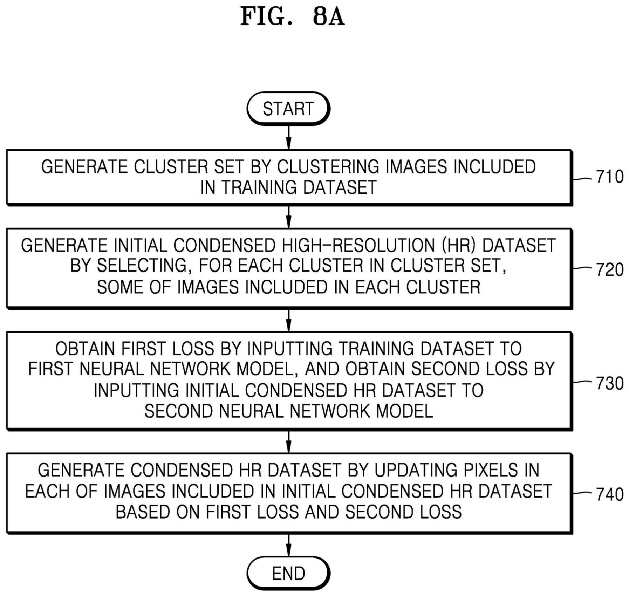

FIG. 8A is a flowchart illustrating a method of condensing a training dataset, according to an embodiment. The method is described with reference to FIG. 8A in conjunction with FIGS. 3 and 6.

Referring to FIG. 8A, according to an embodiment, the method of condensing a training dataset may include operation 710 to operation 740. In an embodiment, operation 710 to operation 740 may be performed by at least one processor included in the server 1000. In an embodiment, the method of condensing a training dataset is not limited to that illustrated in FIG. 8A, and may further include an operation not illustrated in FIG. 8A.

In operation 710, according to an embodiment, the server 1000 may generate the cluster set 410 by clustering the training dataset 310. For example, in order to efficiently condense the training dataset 310, the server 1000 may generate a cluster set 410 by clustering high-resolution images with similar characteristics, rather than condensing the entire training dataset at once. The server 1000 may perform condensation on the cluster set 410. For example, the server 1000 may perform condensation on each of the clusters included in the cluster set 410. For example, the server 1000 may condense high-resolution images for each cluster in which high-resolution images with similar characteristics are grouped. The server 1000 may obtain a condensed high-resolution dataset (a condensed HR dataset) having condensed high-resolution images for each cluster.

In an embodiment, the server 1000 may cluster the training dataset 310 based on pixel information, contrast values, brightness information, shapes, embedding vectors, etc. of high-resolution images included in the training dataset 310. In an embodiment, the server 1000 may cluster the training dataset 310 by using a general algorithm, such as a K-means clustering algorithm.

In an embodiment, the number of clusters may be determined based on a user input. For example, the server 1000 may cluster the training dataset 310 into k clusters, each cluster having i high-resolution images (i and k are natural numbers). For example, the server 1000 may cluster the training dataset 320 into 128 clusters, each having 100 high-resolution images. For example, the server 1000 may generate the cluster set 410 in which the training dataset 310 is clustered into 128 clusters.

According to an embodiment, before performing operation 710, the server 1000 may perform preprocessing on the training dataset 310 based on the amount of information of each of the high-resolution images included in the training dataset 310. The cluster set 410 may be clustered based on the preprocessed training dataset 310.

In operation 720, according to an embodiment, the server 1000 may generate an initial condensed HR dataset by selecting, for each cluster in the cluster set 410, some of the images included in each cluster. In the present disclosure, the cluster set 410 may correspond to the training dataset 611.

According to an embodiment, the server 1000 may select some of the images included in each cluster according to the first initialization operation. According to an embodiment, the server 1000 may determine, based on a user input, the number of images to be extracted from the images included in each cluster. In an embodiment, the number of images extracted from each cluster may be equal to the number of images included in the initial condensed HR dataset 601 and may be equal to the number of images included in the condensed HR dataset 621. For example, the server 1000 may determine the number of final condensed high-resolution images based on a user input.

According to an embodiment, the server 1000 may obtain the LR dataset 612 having low-resolution images by degrading the high-resolution images included in the training dataset 611 according to the second initialization operation. The server 1000 may obtain an initial condensed LR dataset by degrading the initial condensed HR dataset 601 according to the second initialization operation. The server 1000 may obtain an initial condensed LR dataset by performing at least one of compression degradation, blurring degradation, resolution adjustment, or noise addition on the initial condensed HR dataset 601.

According to an embodiment, the server 1000 may initialize the parameters of the first neural network model and the parameters of the second neural network model according to the third initialization operation. For example, the parameters may include weights, gradients, biases, etc.

In operation 730, according to an embodiment, the server 1000 may obtain the first loss 631 by inputting the training dataset 611 to the first neural network model 630, and obtain the second loss 641 by inputting the initial condensed HR dataset 601 to the second neural network model 640.

For example, the neural network model may be an inference network that implements an SR algorithm capable of converting a low-resolution image into a high-resolution image. For example, the first neural network model and the second neural network model may be one neural network model with identical parameters but which is trained with different training data.

The server 1000 may obtain the first loss 631 by calculating a difference between the training dataset 611 and the output value 635 obtained by applying the LR dataset 612 to the first neural network model 630.

The server 1000 may obtain the second loss 641 by calculating a difference between the initial condensed HR dataset 601 and the output value 645 obtained by applying the initial condensed LR dataset to the second neural network model 640.

In addition, via an iteration process, the server 1000 may obtain the second loss 641 by calculating a difference between the condensed HR dataset 621 and the output value 645 obtained by applying the condensed LR dataset 622 to the second neural network model 640.

In operation 740, according to an embodiment, the server 1000 may generate the condensed HR dataset 621 by updating pixels in each of the images included in the initial condensed HR dataset 601 based on the first loss 631 and the second loss 641. The server 1000 may update the condensed HR dataset 621 based on the first loss 631 and the second loss 641 repeatedly generated via the iteration process. By updating the condensed HR dataset 621, the server 1000 may generate the condensed HR dataset 621 having characteristics similar to those of the training dataset 611. When the condensed HR dataset 621 has characteristics similar to those of the training dataset 611, this may mean that the parameters of the second neural network model 640 trained using the condensed HR dataset 621 are close to the parameters of the first neural network model 630 trained using the training dataset 611.

According to an embodiment, the server 1000 may update the condensed HR dataset 621 so that the upscaling performance of the first neural network model 630 trained using the training dataset 611 is similar to the upscaling performance of the second neural network model 640 trained using the condensed HR dataset 621. For example, when gradients of the two neural network models are similar, the upscaling performance of the two neural network models may be described as being similar.

According to an embodiment, the server 1000 may calculate a first gradient of the first neural network model 630 trained using the training dataset 611. The server 1000 may calculate a second gradient of the second neural network model 640 trained using the condensed HR dataset 621. The server 1000 may update the condensed HR dataset 621 so that a difference between the first gradient and the second gradient is reduced. For example, the server 1000 may update the condensed HR dataset until the difference between the first gradient and the second gradient is minimized.

The first gradient may represent a slope of the first loss 631 with respect to weights of the first neural network model 630. For example, the first gradient may be expressed as $\frac{\partial Loss1}{\partial w1}$. Here, Loss1 is the first loss 631, and w1 may be a weight of the first neural network model 630. According to an embodiment, the first loss 631 may be characterized by not being a MAE. For example, an MSE, which is twice differentiable, may be applied to the first loss 631.

The second gradient may represent a slope of the second loss 641 with respect to weights of the second neural network model 640. For example, the second gradient may be expressed as $\frac{\partial Loss2}{\partial w2}$. Here, Loss2 is the second loss 641, and w2 may be a weight of the second neural network model 640. According to an embodiment, the second loss 641 may be characterized by not being a MAE. For example, an MSE, which is twice differentiable, may be applied to the second loss 641.

According to an embodiment, the server 1000 may calculate the matching loss 650, which is the difference between the first gradient and the second gradient. For example, the matching loss 650 may be expressed as Loss1-Loss2. The server 1000 may adjust pixels of images included in the condensed HR dataset 621 in a direction in which the matching loss 650 is minimized. The server 1000 may calculate a matching gradient so as to minimize the matching loss 650. In a manner similar to a gradient descent algorithm, the matching gradient may be used to adjust pixels in the images within the condensed HR dataset 621 in the direction in which the matching loss 650 is minimized.

The matching gradient may represent a slope of the matching loss 650 with respect to pixels in each of the images within the condensed HR dataset 621. For example, the matching gradient may be expressed as $\frac{\partial (Mathcing\ \ Loss)}{\partial p}$. Here, Matching Loss may be the matching loss 650 that is the difference between the first loss 631 and the second loss 641, and p may be pixels in each of the images within the condensed HR dataset 621.

In an embodiment, the server 1000 may obtain a matching gradient, which is a slope of the matching loss 650, by differentiating the matching loss 650 with respect to pixels of the images in the condensed HR dataset 621. In a manner similar to the gradient descent algorithm, the server 1000 may obtain a pixel (x value) in the condensed HR dataset 621 at which a matching loss (y value) has a minimum value by moving in the direction of a lower absolute value of the matching gradient.

In an embodiment, the server 1000 may update pixel values of the images in the condensed HR dataset 621 by reflecting the matching gradient in pixels of the images in the condensed HR dataset 621 (See Equation 2). In an embodiment, the matching gradient may be updated in the condensed HR dataset 621 via a backward pass.

According to an embodiment, by repeating operations 720, 730, and 740, the server 1000 may update the condensed HR dataset 621 so that the matching loss 650, which is the difference between the first gradient and the second gradient, is minimized. According to an embodiment, the server 1000 may generate the condensed HR dataset 621 having characteristics similar to those of the training dataset 611. In an embodiment, this may mean that the second gradient of the second neural network model 640 trained using the condensed HR dataset 621 may approximate the first gradient of the first neural network model 630 trained using the training dataset 611. In an embodiment, the number of images included in the condensed HR dataset 621 may be reduced compared to the number of images included in the training dataset 611. Accordingly, the amount of training dataset required for training an AI model for performing upscaling in the image processing device 100 may be reduced, and the amount of external memory usage and power consumption for computation in the image processing device 100 may be reduced.

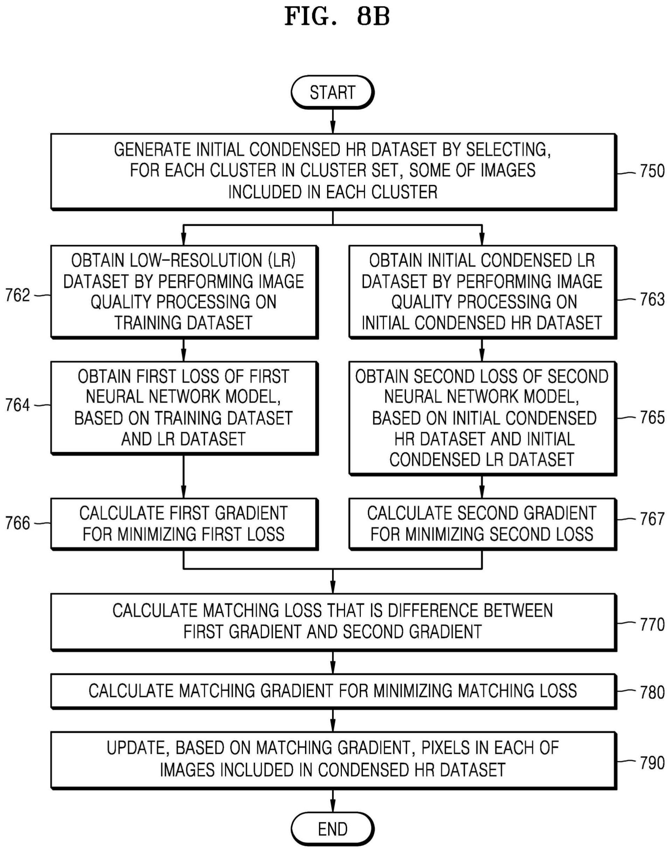

FIG. 8B is a detailed flowchart illustrating a method of condensing a training dataset, according to an embodiment. The method is described with reference to FIG. 8B in conjunction with FIGS. 3 and 6.

Referring to FIG. 8B, according to an embodiment, the method of condensing a training dataset may include operation 750 to operation 790. In an embodiment, operation 750 to operation 790 may be performed by at least one processor included in the server 1000. In an embodiment, the method of condensing a training dataset is not limited to that illustrated in FIG. 8B, and may further include an operation not illustrated in FIG. 8B.

In operation 750, according to an embodiment, the server 1000 may generate the initial condensed HR dataset 601 by selecting, for each cluster in the cluster set 410, some of the images included in each cluster. Operation 750 corresponds to operation 720 in FIG. 8A.

In operation 762, according to an embodiment, the server 1000 may obtain the LR dataset 612 by performing image quality processing on the training dataset 611. For example, the server 1000 may obtain the LR dataset 612 with degraded image quality by performing at least one of compression degradation, blurring degradation, resolution adjustment, or noise addition on the training dataset 611.

In operation 764, according to an embodiment, the server 1000 may obtain the first loss 631 of the first neural network model 630, based on the training dataset 611 and the LR dataset 612. For example, the server 1000 may calculate the first loss 631, which is the difference between the training dataset 611 and the output value 635 obtained by inputting the LR dataset 612 to the first neural network model 630.

In operation 766, according to an embodiment, the server 1000 may calculate a first gradient for minimizing the first loss 631. For example, the first gradient may represent a slope of the first loss 631 with respect to parameters of the first neural network model 630. For example, the parameters may be weights of the first neural network model 630. For example, the first gradient may be expressed as $\frac{\partial Loss1}{\partial w1}$. Here, Loss1 is the first loss 631, and w1 may be a weight of the first neural network model 630.

In operation 763, according to an embodiment, the server 1000 may obtain an initial condensed LR dataset by performing image quality processing on the initial condensed HR dataset 601. For example, the server 1000 may obtain an initial condensed LR dataset by performing at least one of compression degradation, blurring degradation, resolution adjustment, or noise addition on the initial condensed HR dataset 601.

In operation 765, according to an embodiment, the server 1000 may obtain the second loss 641 of the second neural network model 640, based on the initial condensed HR dataset 601 and the initial condensed LR dataset. For example, the server 1000 may calculate the second loss 641, which is a difference between the initial condensed HR dataset 601 and the output value 645 obtained by inputting the initial condensed LR dataset to the second neural network model 640.

In addition, according to an embodiment, the server 1000 may calculate, via an iteration process, the second loss 641 based on the condensed HR dataset 621 and the condensed LR dataset 622. For example, the server 1000 may obtain the second loss 641 by calculating a difference between the condensed HR dataset 621 and the output value 645 obtained by applying the condensed LR dataset 622 to the second neural network model 640.

In operation 767, according to an embodiment, the server 1000 may calculate a second gradient for minimizing the second loss 641 of the second neural network model 640. For example, the second gradient may represent a slope of the second loss 641 with respect to parameters of the second neural network model 640. For example, the parameters may be weights of the second neural network model 640. For example, the second gradient may be expressed as $\frac{\partial Loss2}{\partial w2}$. Here, Loss2 is the second loss 641, and w2 may be a weight of the second neural network model 640.

In operation 770, the server 1000 may calculate the matching loss 650, which is the difference between the first gradient and the second gradient. For example, the matching loss 650 may be expressed as Loss1-Loss2.

In operation 780, according to an embodiment, the server 1000 may calculate a matching gradient for minimizing the matching loss 650. The server 1000 may adjust pixels of images included in the condensed HR dataset 621 in a direction in which the matching loss 650 is minimized. The server 1000 may calculate a matching gradient so as to minimize the matching loss 650. In a manner similar to the gradient descent algorithm, the matching gradient may be used to adjust pixels in the images within the condensed HR dataset 621 in the direction in which the matching loss 650 is minimized.

The matching gradient may represent a slope of the matching loss 650 with respect to pixels in each of the images within the condensed HR dataset 621. For example, the matching gradient may be expressed as $\frac{\partial (Mathcing\ \ Loss)}{\partial p}$. Here, Matching Loss may be the matching loss 650 that is the difference between the first loss 631 and the second loss 641, and p may be pixels in each of the images within the condensed HR dataset 621. The server 1000 may obtain a pixel (x value) in the condensed HR dataset 621 at which a matching loss (y value) has a minimum value by moving in the direction of a lower absolute value of the matching gradient.

In operation 790, according to an embodiment, the server 1000 may update, based on the matching gradient, pixels in each of the images included in the condensed HR dataset 621. The server 1000 may update pixel values of the images in the condensed HR dataset 621 by reflecting the matching gradient in pixels of the images in the condensed HR dataset 621 (See Equation 2). In an embodiment, the matching gradient may be applied to update the condensed HR dataset 621 via a backward pass.

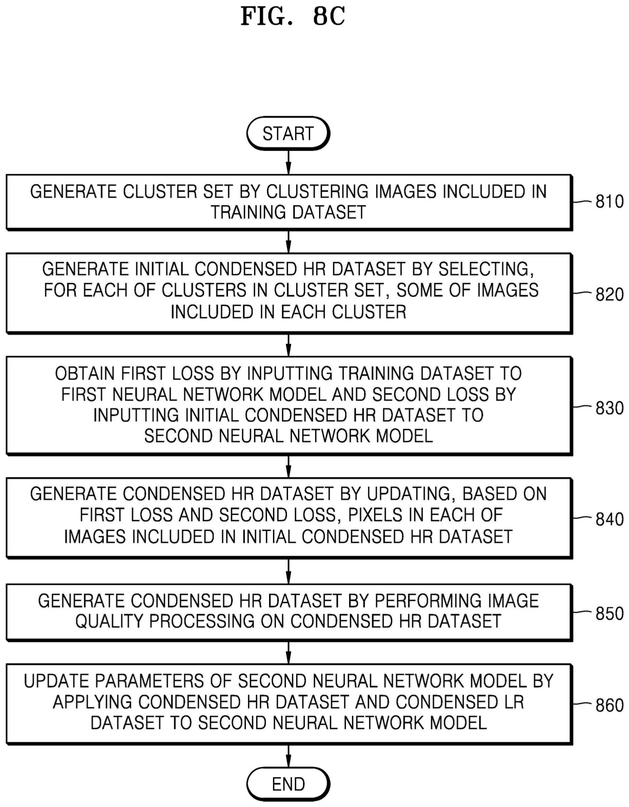

FIG. 8C is a flowchart illustrating a method of condensing a training dataset, according to an embodiment. The method is described with reference to FIG. 8C in conjunction with FIGS. 3 and 6.

Referring to FIG. 8C, the method of condensing a training dataset, according to the embodiment, may include operation 810 to operation 860. In an embodiment, operation 810 to operation 860 may be performed by at least one processor included in the server 1000. In an embodiment, the method of condensing a training dataset is not limited to that illustrated in FIG. 8C, and may further include an operation not illustrated in FIG. 8C.

In operation 810, according to an embodiment, the server 1000 may generate the cluster set 410 by clustering the training dataset 310. Operation 810 corresponds to operation 710 in FIG. 8A.

In operation 820, according to an embodiment, the server 1000 may generate an initial condensed HR dataset by selecting, for each cluster in the cluster set 410, some of the images included in each cluster. In the present disclosure, the cluster set 410 may correspond to the training dataset 611. Operation 820 corresponds to operation 720 in FIG. 8A.

In operation 830, according to an embodiment, the server 1000 may obtain the first loss 631 by inputting the training dataset 611 to the first neural network model 630, and the second loss 641 by inputting the initial condensed HR dataset 601 to the second neural network model 640. Operation 830 corresponds to operation 730 in FIG. 8A.

In operation 840, according to an embodiment, the server 1000 may generate the condensed HR dataset 621 by updating pixels in each of the images included in the initial condensed HR dataset 601 based on the first loss 631 and the second loss 641. Operation 840 corresponds to operation 740 in FIG. 8A.

In operation 850, according to an embodiment, the server 1000 may generate the condensed LR dataset 622 by performing image quality processing on the condensed HR dataset 621. According to an embodiment, the server 1000 may obtain the condensed LR dataset 622 by performing at least one of compression degradation, blurring degradation, resolution adjustment, or noise addition on the condensed HR dataset 621.

In operation 860, according to an embodiment, the server 1000 may update the parameters of the second neural network model 640 by applying the condensed HR dataset 621 and the condensed LR dataset 622 to the second neural network model 640.

According to an embodiment, the server 1000 may update the parameters of the second neural network model 640 by applying the updated condensed HR dataset 621 and the updated condensed LR dataset 622 to the second neural network model 640. According to an embodiment, the server 1000 may calculate the second loss 641 which is difference between the updated condensed HR dataset 621 and the output value 645 obtained by applying the updated condensed LR dataset 622 to the second neural network model 640. According to an embodiment, the server 1000 may calculate a second gradient for the parameters of the second neural network model 640 based on the second loss 641. According to an embodiment, the server 1000 may update the parameters of the second neural network model 640 based on the second gradient through the gradient descent algorithm, etc.

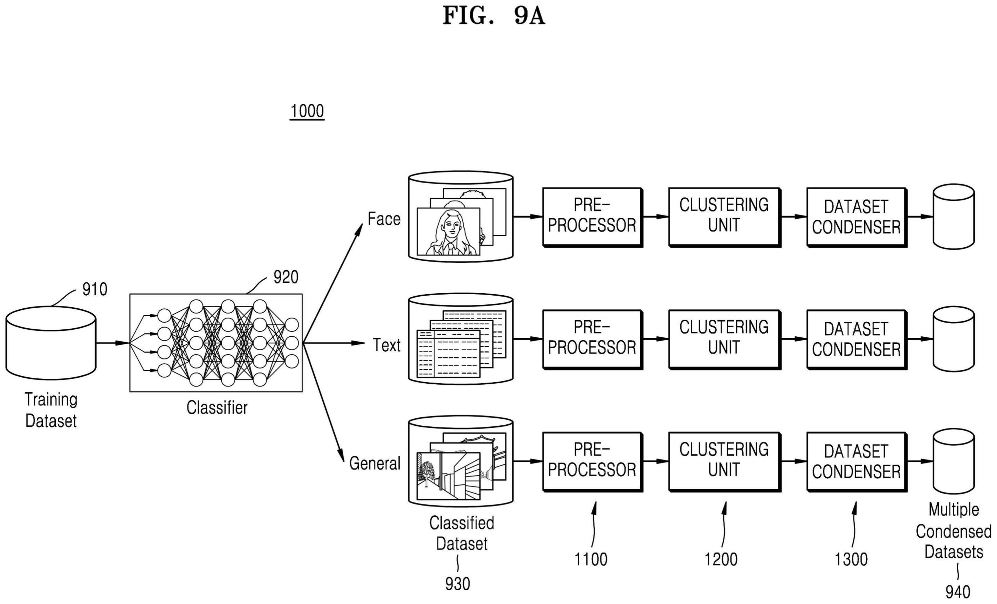

FIG. 9A is a diagram illustrating a process by which a server condenses a training dataset by category, according to an embodiment.

Referring to FIG. 9A, according to an embodiment, the server 1000 may classify categories of a large training dataset 910. By classifying categories of the training dataset 910, the server 1000 may generate classified training datasets 930.

For example, the server 1000 may include an image classifier 920. The server 1000 may classify the large training dataset 910 into categories via the image classifier 920. The server 1000 may identify categories of the large training dataset 910 via the image classifier 920. The image classifier 920 may be an algorithm or a set of algorithms that receives images as input and classifies the images into categories based on the received images, software for executing the set of algorithms, and/or hardware for executing the set of algorithms.

For example, the server 1000 may identify categories of the training dataset 910 and classify it into categories such as human face, text, general. etc. The server 1000 may generate training datasets 930 by classifying the training dataset 910 by category.

According to an embodiment, the server 1000 may generate the multiple condensed datasets 940 by condensing images included in the training datasets 930 classified by category. According to an embodiment, the server 1000 may generate a plurality of condensed datasets condensed by category, by condensing high-resolution images included in the training datasets 930 classified by category. The server 1000 may obtain multiple condensed datasets 940 corresponding to the plurality of condensed datasets.

For example, the server 1000 may perform preprocessing, clustering, and dataset condensation on each of the plurality of training datasets 930 classified by category. The server 1000 may generate the multiple condensed datasets 940 by executing the preprocessor 1100, the clustering unit 1200, and the dataset condenser 1300 for each of the plurality of training datasets 930 classified by category.

For example, the server 1000 may obtain a condensed dataset condensed by category, by performing preprocessing, clustering, and dataset condensation on a training dataset corresponding to a category of human face.

For example, the server 1000 may obtain a condensed dataset condensed by category, by performing preprocessing, clustering, and dataset condensation on a training dataset corresponding to a category of text.

For example, the server 1000 may obtain a condensed dataset condensed by category, by performing preprocessing, clustering, and dataset condensation on a training dataset corresponding to a general category.

For example, the server 1000 may generate the multiple condensed datasets 940 including a plurality of condensed datasets obtained via condensation by category.

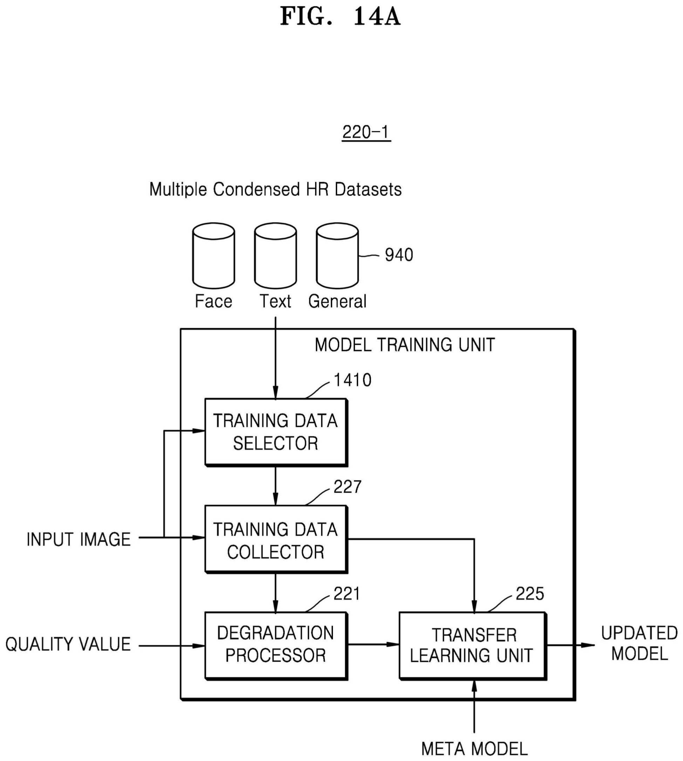

In an embodiment, the image processing device 100 may store, in the memory 102, the multiple condensed datasets 940 obtained via condensation by category, and selectively obtain a condensed dataset corresponding to a category related to an input image. This is described in detail with reference to FIG. 14A.

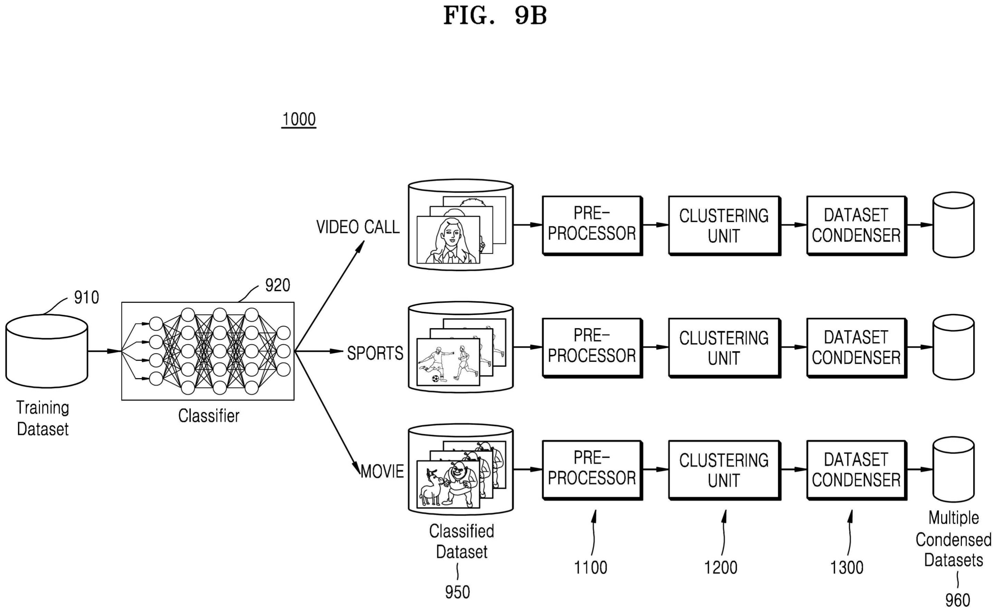

FIG. 9B is a diagram illustrating a process by which a server condenses a training dataset by type of content, according to an embodiment.

Referring to FIG. 9B, according to an embodiment, the server 1000 may classify the large training dataset 910 by content type. In an embodiment, the server 1000 may generate classified training datasets 950 by classifying the content of the training dataset 910 by type.

For example, a content type refers to the type or genre of content, and content types may include video call content, sports content, movie content, music content, game content, animation content, social network service (SNS) content for real-time chat, web browser content, two-dimensional (2D) content, three-dimensional (3D) content, and various other types.

According to an embodiment, the server 1000 may classify the large training dataset 910 by content type via the image classifier 920. The server 1000 may identify a type of content of the large training dataset 910 via the image classifier 920. The image classifier 920 may be an algorithm or a set of algorithms that receives images as input and classifies the images into different types of content based on the received images, software for executing the set of algorithms, and/or hardware for executing the set of algorithms.

For example, the server 1000 may identify types of content in the training dataset 910 and classify images included in the training dataset 910 into types such as video call content, sports content, movie content, music content, game content, animation content, SNS content for real-time chat, web browser content, 2D content, and 3D content. The server 1000 may generate training datasets 950 by classifying the training dataset 910 by category.

According to an embodiment, the server 1000 may generate multiple condensed datasets 960 by condensing images included in the training datasets 950 classified by content type. According to an embodiment, the server 1000 may generate a plurality of condensed datasets for each content type by condensing high-resolution images included in the training datasets 950 classified by content type. The server 1000 may obtain multiple condensed datasets 960 corresponding to the plurality of condensed datasets. For example, the server 1000 may perform preprocessing, clustering, and dataset condensation on each of the plurality of training datasets 950 classified by content type.

For example, the server 1000 may obtain a condensed dataset of images corresponding to video call content by performing preprocessing, clustering, and dataset condensation on a training dataset corresponding to the video call content. For example, the server 1000 may obtain a condensed dataset of images corresponding to sports content by performing preprocessing, clustering, and dataset condensation on a training dataset corresponding to the sports content. For example, the server 1000 may obtain a condensed dataset of images corresponding to movie content by performing preprocessing, clustering, and dataset condensation on a training dataset corresponding to the movie content.

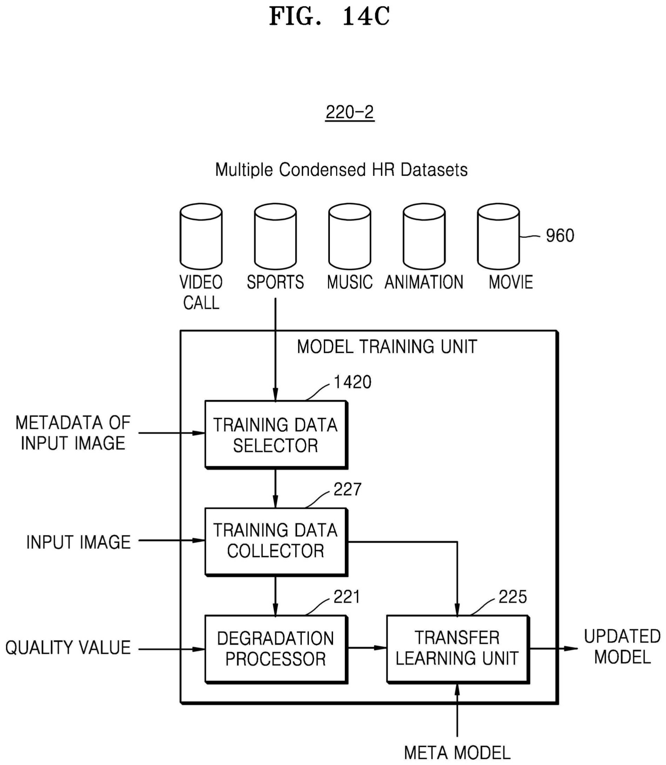

In an embodiment, the image processing device 100 may store, in the memory 102, the multiple condensed datasets 960 obtained via condensation by category, and selectively obtain a condensed dataset corresponding to content related to an input image. This is described in detail with reference to FIG. 14C.

Furthermore, according to an embodiment, the server 1000 may classify types of content without using the image classifier 920. For example, the server 1000 may classify the types of content through properties, types, and genres of applications. In addition, for example, the server 1000 may identify to which content each of the images corresponds by identifying metadata of the images included in the training dataset 910.

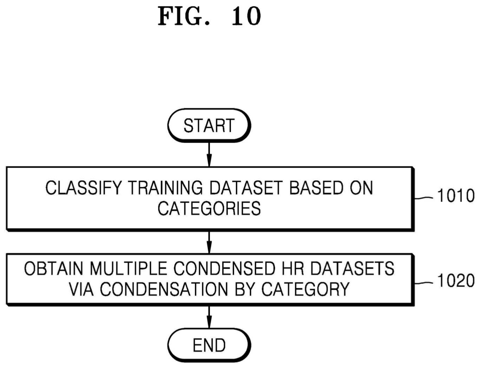

FIG. 10 is a flowchart illustrating a method of condensing a training dataset by category, according to an embodiment.

Referring to FIG. 10, in operation 1010, according to an embodiment, the server 1000 may classify the training dataset 910 based on categories.

For example, the server 1000 may identify categories of the large training dataset 910 via the image classifier 920. The server 1000 may classify the large training dataset 910 into categories.

In operation 1020, according to an embodiment, the server 1000 may obtain the multiple condensed datasets 940 by condensing training datasets included in each category.

For example, the server 1000 may perform preprocessing, clustering, and dataset condensation on each of a plurality of training datasets respectively included in a plurality of categories. The server 1000 may generate the multiple condensed datasets 940 by independently condensing the plurality of training datasets classified into the plurality of categories. For example, the server 1000 may include a plurality of condensed datasets obtained via independent condensation by category.

Alternatively, the server 1000 may classify the large training dataset 910 by content type. In an embodiment, the server 1000 may generate the classified training datasets 950 by classifying the content of the training dataset 910 by type.

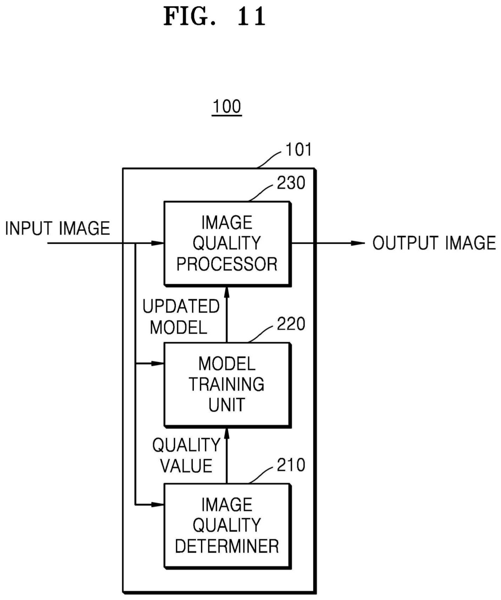

Hereinafter, a process by which the image processing device 100 processes an image quality of an input image by using a condensed dataset is described with reference to FIGS. 11 to 15.

FIG. 11 is an internal block diagram of a processor of an image processing device, according to an embodiment.

Referring to FIG. 11, the processor 101 of the image processing device 100 may include an image quality determiner 210, a model training unit 220, and an image quality processor 230. The processor 101 may execute one or more instructions stored in the memory 102 to perform operations of the image quality determiner 210, the model training unit 220, and the image quality processor 230.

In an embodiment, the image quality determiner 210 may determine an image quality or quality of an input image. An image quality of an image may represent the degree of degradation in the image. After an image is obtained via a capture device, degradation occurs due to loss of information as the image undergoes processes such as processing, compression, storage, transmission, and restoration. The image quality determiner 210 may analyze an image to determine the degree of degradation in the image.

In an embodiment, the image quality determiner 210 may analyze the input image in real time to determine at least one of image compression degradation, image sharpness degree, degree of blur, degree of noise, or image resolution.

In an embodiment, the image quality determiner 210 may assess the image quality of the input image by using a third neural network model trained to assess the image quality of the input image. In an embodiment, the third neural network model is a neural network trained to assess an image quality of a video and/or an image by using an image quality assessment (IQA) technique and/or a video quality assessment (VQA) technique.

In an embodiment, the image quality determiner 210 may transmit, to the model training unit 220, the image quality of the input image obtained by analyzing the input image.

In an embodiment, the model training unit 220 may train a meta model by using the image quality value (quality value) for the input image obtained by the image quality determiner 210. The model training unit 220 may solve a domain gap problem in which the image quality of the input image changes rapidly by using the input image as a training dataset.

In an embodiment, the model training unit 220 may receive the input image. The model training unit 220 may also receive the image quality of the input image from the image quality determiner 210.

In an embodiment, the model training unit 220 may train a meta model by using a training dataset. Instead of using a large training dataset, the model training unit 220 may use a small training dataset with characteristics similar to those of the large training dataset. The small training dataset may refer to a condensed HR dataset obtained by condensing the large training dataset.

In an embodiment, the model training unit 220 may obtain a condensed HR dataset corresponding to the training dataset. In an embodiment, the model training unit 220 may obtain, from the condensed HR dataset, a degraded dataset corresponding to the input image. In an embodiment, the model training unit 220 may degrade an image quality of images in the condensed HR dataset so that the image quality of the images corresponds to the image quality of the input image. For example, the model training unit 220 may generate a condensed LR dataset including low-resolution images by compressing, blurring, downsampling, or adding noise to the images within the condensed HR dataset.

In an embodiment, the model training unit 220 may train a meta model, based on the condensed HR dataset and the condensed LR dataset obtained by performing image quality processing on the condensed HR dataset so that the image quality of the condensed LR dataset corresponds to the image quality of the input image.

In an embodiment, the model training unit 220 may train the meta model by updating parameters of the meta model so that a difference between the condensed HR dataset and an output value obtained by applying the condensed LR dataset to the meta model is minimized. The meta model trained using the training dataset corresponding to the input image may be referred to as a transfer model.

In an embodiment, the performance of the meta model trained using the condensed HR dataset, which is the small training dataset, may be similar to the performance of the meta model trained using the large training dataset. For example, the parameters of the meta model trained using the condensed HR dataset may be close to or identical to the parameters of the meta model trained using the large training dataset.

In an embodiment, the image quality processor 230 may load and use the meta model, i.e., the transfer model, obtained and trained by the model training unit 220. The image quality processor 230 may process an image quality of an input image by using the transfer model. In an embodiment, the image quality processor 230 may be a fourth neural network trained to process the image quality of the input image. For example, the fourth neural network model may be an inference network that implements an SR algorithm capable of converting a low-resolution image into a high-resolution image. The fourth neural network model may perform the same functions as the first neural network model (630 of FIG. 6) or the second neural network model (640 of FIG. 6), but is not limited thereto. The image quality processor 230 may obtain a high-resolution image by processing the image quality of the input image by using SR technology using deep learning.

In an embodiment, instead of training a meta model based on a large training dataset, the image processing device 100 may train the meta model based on a small condensed HR dataset. In an embodiment, the upscaling performance of the meta model trained based on the small condensed HR dataset may be similar to the upscaling performance of the meta model trained based on the large training dataset. Accordingly, the amount of training dataset required for training an AI model for performing upscaling in the image processing device 100 may be reduced, and the amount of external memory usage and power consumption for computation in the image processing device 100 may be reduced.

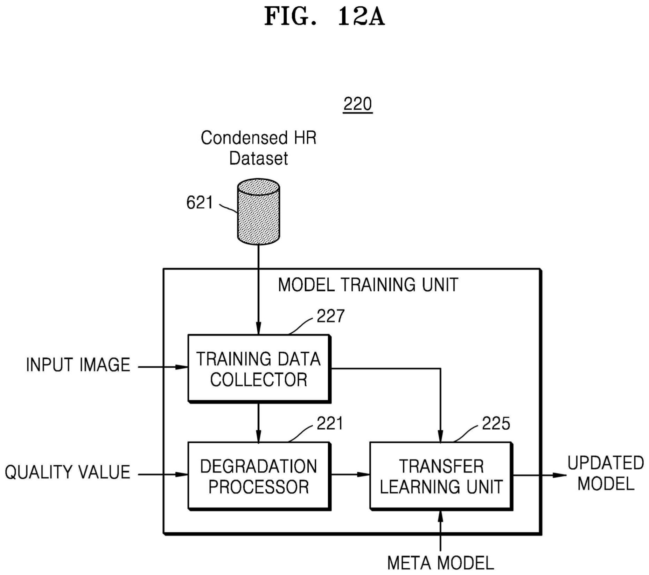

Referring to FIG. 12A, the model training unit 220 may include a training data collector 227, a degradation processor 221, and a transfer learning unit 225.

In an embodiment, the model training unit 220 may obtain a meta model. The model training unit 220 may use the input image and the condensed HR dataset 621 as a training dataset. The model training unit 220 may generate an LR dataset by degrading the training dataset to correspond to the image quality of the input image. The model training unit 220 may generate a transfer model that is adaptive to the input image by training the meta model using the training dataset and the LR dataset as HR/LR pairs.

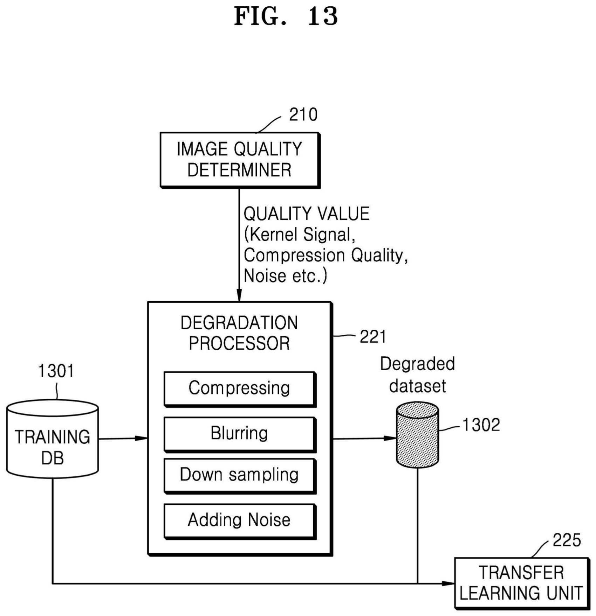

In an embodiment, the training data collector 227 may obtain the input image and the condensed HR dataset 621. The training data collector 227 may store the input image and the condensed HR dataset 621 as a training dataset. The training data collector 227 may store the training dataset in the memory (102 of FIG. 2). For example, the training dataset may correspond to a training dataset 1301 of FIG. 13. The condensed HR dataset 621 may be stored in an external DB or in the internal memory 102. The condensed HR dataset 621 may be provided from the server (1000 of FIG. 2).

In an embodiment, the training data collector 227 may obtain the condensed HR dataset 621, which is a small training dataset, instead of a large training dataset. For example, the large training dataset may correspond to the training dataset 310 of FIG. 3 or the training dataset 611 of FIG. 6. For example, the condensed HR dataset 621 may correspond to the condensed dataset 320 of FIG. 3. For example, the condensed HR dataset 621 may have fewer high-resolution images than the large training dataset. In an embodiment, the training data collector 227 uses the condensed HR dataset 621 as a training dataset for training the meta model, thereby reducing the amount of the memory 102 used and the amount of computation. In an embodiment, the training data collector 227 may provide the stored training dataset to the degradation processor 221. Furthermore, in an embodiment, the training data collector 227 may provide the stored training dataset to the transfer learning unit 225.

In an embodiment, the degradation processor 221 may receive the training dataset from the training data collector 227. The model training unit 220 may perform image quality processing on the training dataset that includes the input image and the condensed HR dataset 621. The degradation processor 221 may obtain a degraded dataset by performing image quality processing on the training dataset based on an image quality, i.e., a quality value, of the input image.

The degradation processor 221 may degrade an image quality of images included in the condensed HR dataset 621 so that the image quality of the images corresponds to the image quality of the input image. The degradation processor 221 may degrade the input image to have an image quality corresponding to the image quality of the input image. For example, the image quality corresponding to the image quality of the input image may be a quality value determined by the image quality determiner 210 of FIG. 11 as degradation information that is lost when the input image undergoes processes such as compression, storage, transmission, and restoration. For example, the degradation processor 221 may generate images with degraded image quality) by performing at least one of compression degradation, blurring, noise addition, or downsampling on the images included in the condensed HR dataset 621. For example, the degradation processor 221 may generate an image with degraded image quality by performing at least one of compression degradation, blurring, noise addition, or downsampling on the input image. The degradation processor 221 may generate a degraded dataset including degraded images.

In an embodiment, the degradation processor 221 may transmit the degraded dataset to the transfer learning unit 225.

In an embodiment, the transfer learning unit 225 may receive, from the training data collector 227, the training dataset including the condensed HR dataset 621 and the input image. The transfer learning unit 225 may receive the degraded dataset from the degradation processor 221. The transfer learning unit 225 may use the training dataset and the degraded dataset as training data of HR-LR pairs.

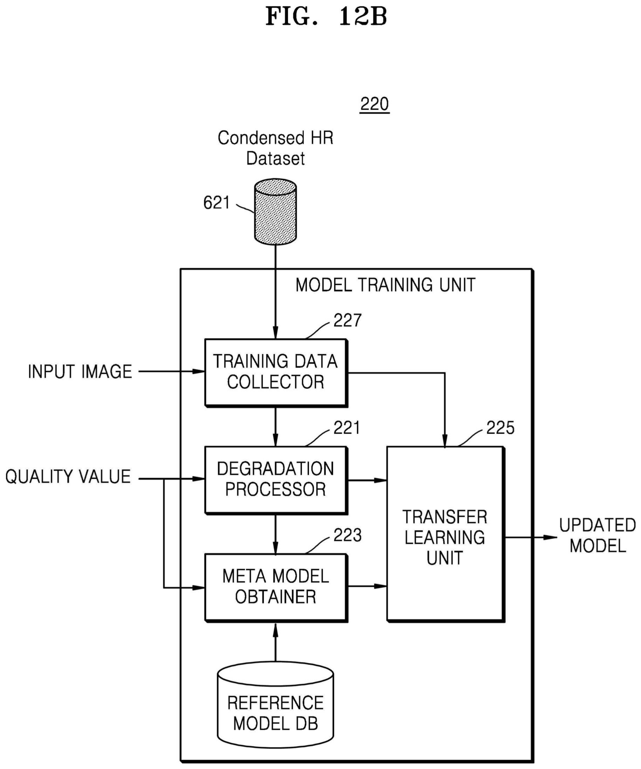

In an embodiment, the transfer learning unit 225 may obtain a meta model. For example, the transfer learning unit 225 may obtain a meta model from a meta model obtainer (223 of FIG. 12B). The transfer learning unit 225 may train the meta model by using the training dataset and the degraded dataset. In an embodiment, the transfer learning unit 225 may train the meta model by using a gradient descent algorithm.

In an embodiment, the transfer learning unit 225 may compare the training dataset with an image output from the meta model by inputting a dataset degraded from the training dataset to the meta model, calculate a difference between the two as a slope of a loss function, and obtain parameters of the meta model when an absolute value of the slope reaches a minimum. In other words, the transfer learning unit 225 may obtain a transfer model by training the meta model by continuously updating parameters of the meta model so that a quantitative difference between the image output from the meta model and a condensed high-resolution image included in the training dataset is minimized.

In an embodiment, the transfer learning unit 225 may train the meta model by using various known learning algorithms. The transfer learning unit 225 may selectively apply learning hyperparameters (a learning rate, a batch size, a termination condition, etc.) and optimization algorithms (stochastic gradient descent (SGD), adaptive moment estimation (Adam), AdamP, etc.) according to system constraints, e.g., limited memory, operators, power, etc.

In this way, according to an embodiment, the transfer learning unit 225 may generate a transfer model adaptively trained according to the input image. The meta model updated by the transfer learning unit 225 may be loaded into the image quality processor 230 and used for image quality processing.

FIG. 12B is a diagram illustrating the model training unit 220 according to an embodiment.

Referring to FIG. 12B, the model training unit 220 may further include the meta model obtainer 223 in addition to the training data collector 227, the degradation processor 221, and the transfer learning unit 225. In describing FIG. 12B, repeated descriptions with respect to FIG. 12A are omitted.

In an embodiment, the model training unit 220 may obtain a meta model based on an image quality of an input image. The model training unit 220 may generate a transfer model that is adaptive to the input image by training the meta model using the input image and the condensed HR dataset 621 as a training dataset.

In an embodiment, the meta model obtainer 223 may obtain a meta model based on an image quality, i.e., a quality value, of the input image. When on-device learning is performed from a random initial model without the meta model obtainer 223, a long training time is required. However, according to an embodiment, through the meta model obtainer 223, a model suitable for the quality of the input image may be selected in real time, and a meta model may be quickly generated using the selected model.

In an embodiment, the meta model obtainer 223 may obtain a meta model by using a plurality of reference models. A reference model is an image quality processing model pre-trained using training images, and may be stored in the memory 102, a reference model DB, or the like. The manufacturer may generate a plurality of reference models in advance and store them in the image processing device 100.

In an embodiment, the plurality of reference models may be each trained with training images having uniformly spaced image quality values. Alternatively, in another embodiment, an image quality value corresponding to a reference model may be determined based on a distribution of image quality values of training images. In an embodiment, the meta model obtainer 223 may compare, with the image quality of the input image, an image quality of images used to train each of the plurality of reference models, and search for a reference model trained with training images having an image quality similar to that of the input image.

In an embodiment, when a plurality of reference models are found, the meta model obtainer 223 may obtain a meta model by interpolating the plurality of reference models. In an embodiment, the meta model obtainer 223 may respectively assign weights to the plurality of reference models found and obtain a meta model by performing a weighted sum operation on the reference models assigned the weights.

In an embodiment, the meta model obtainer 223 may transmit the obtained meta model to the transfer learning unit 225.

In an embodiment, the transfer learning unit 225 may train the meta model, which is obtained by the meta model obtainer 223, by using the training dataset received from the training data collector 227 and the degraded dataset received from the degradation processor 221. In an embodiment, the transfer learning unit 225 may train the meta model by using a gradient descent algorithm.

FIG. 13 is a diagram illustrating an operation in which a degradation processor performs image quality processing on a training dataset, according to an embodiment.

Referring to FIG. 13, the degradation processor 221 may degrade an image quality of the condensed HR dataset 621 included in a training dataset 1301 and an input image. The training dataset 1301 may be stored in a new DB.

In an embodiment, the degradation processor 221 may degrade condensed high-resolution images included in the condensed HR dataset 621 according to a quality value of the input image. In addition, in an embodiment, the degradation processor 221 may degrade the input image according to the quality value of the input image.

In an embodiment, the degradation processor 221 may receive a degradation factor and a quality value of an image from the image quality determiner 210, e.g., IQA, and degrade collected images to have a quality value corresponding to the quality value of the image.

For example, when the image quality determiner 210 analyzes an image to obtain an image quality value of the image by using Kernel Sigma, which indicates the extent of blurring of the image, and Compression Quality, which indicates the degree of compression degradation of the image, the degradation processor 221 may degrade images included in the condensed HR dataset 621 by applying blurring and image compression based on the same extent of blurring and the same degree of compression degradation. In addition, the degradation processor 221 may degrade the input image by performing blurring and image compression on the input image.

In an embodiment, the degradation processor 221 may perform filtering to degrade an image. For example, the degradation processor 221 may use a 2D kernel to apply blur degradation to an image.

In an embodiment, the degradation processor 221 may generate a degraded dataset 1302 by degrading an image quality of condensed high-resolution images from the condensed HR dataset 621 included in the training dataset 1301 and the input image.

The training dataset 1301 and the degraded dataset 1302 may be transmitted to the transfer learning unit 225 and used as training data for a meta model.

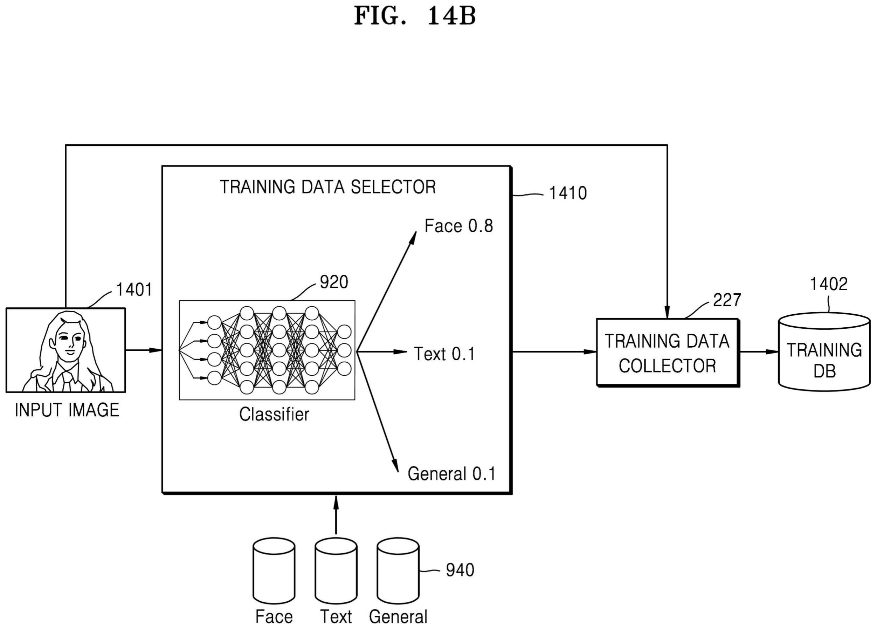

FIG. 14A is a diagram illustrating a model training unit 220-1 according to an embodiment. FIG. 14B is a diagram illustrating an operation of a training data selector including an AI model, according to an embodiment.

Referring to FIG. 14A, the model training unit 220-1 may further include a training data selector 1410 in addition to the training data collector 227, the degradation processor 221, and the transfer learning unit 225.

In an embodiment, the model training unit 220-1 may identify a category of an input image and selectively obtain a condensed HR dataset having a category corresponding to the category of the input image. In an embodiment, the model training unit 220-1 may obtain the multiple condensed datasets (940 of FIG. 9A) by condensing a training dataset by category. In an embodiment, the model training unit 220-1 may identify the category of the input image and selectively select, in an external DB, only a condensed dataset corresponding to the category of the input image from among the multiple condensed datasets 940. In an embodiment, the model training unit 220-1 may select a condensed dataset having a category corresponding to the category of the input image from among the multiple condensed datasets 940 stored in the external DB and store the condensed dataset in a new DB (e.g., 1402). The multiple condensed datasets 940 may be stored in the external DB (e.g., the memory 1002 of the server 1000). A condensed dataset having a category corresponding to the category of the input image from among the multiple condensed datasets 940 may be stored in the internal memory 102 of the image processing device 100.

In an embodiment, the training data selector 1410 may identify a category of an input image. In an embodiment, the training data selector 1410 may be an algorithm or a set of algorithms that receives images as input and classifies the images into categories based on the received images, software for executing the set of algorithms, and/or hardware for executing the set of algorithms. In an embodiment, the training data selector 1410 may use a Softmax Regression function to obtain various classes or categories as a result. However, the training data selector 1410 is not limited thereto, and may be implemented as various types of algorithms capable of classifying a category of an image from an input image.

In an embodiment, the training data selector 1410 may analyze the input image to identify a category of the input image as a probability value. The training data selector 1410 may identify a category with a highest probability value as the category of the input image, and select a condensed HR dataset that is a condensation of images included in the identified category from among the multiple condensed datasets 940. The multiple condensed datasets 940 may include high-resolution images included in the condensed HR dataset. In an embodiment, the condensed HR dataset may be obtained by condensing a training dataset having a category corresponding to the category of the input image.

For example, the training data selector 1410 may obtain a probability value for a category or class of the input image as a result. For example, referring to FIG. 14B, the training data selector 1410 may determine that a probability that the category of the input image is a human face, a probability that the category is text, and a probability that the category is another category (General) are 80 %, 10 %, and 10 %, respectively.

In an embodiment, the training data selector 1410 may identify a category with a highest probability value as the category of the input image. For example, referring to FIG. 14B, the training data selector 1410 may identify the category of the input image as being a human face that is a category having a largest value in a vector. In this case, the training data selector 1410 may select and obtain a condensed HR dataset by condensing a training dataset corresponding to the category of a human face from among the multiple condensed datasets 940.

Alternatively, in an embodiment, the training data selector 1410 may identify categories of the input image as probability values and select condensed HR datasets from among the multiple condensed datasets 940 in proportion to the probability values of the identified categories.

In an embodiment, the training data selector 1410 may obtain a condensed HR dataset that is a condensation of a training dataset corresponding to the category of a human face, a condensed HR dataset that is a condensation of a training dataset corresponding to the category of text, and a condensed HR dataset that is a condensation of a training dataset corresponding to a general category, at a ratio of 8:1:1, from the multiple condensed datasets 940.

In an embodiment, the training data selector 1410 may select a condensed HR dataset corresponding to the category of the input image and provide the condensed HR dataset to the training data collector 227.

In an embodiment, the training data collector 227 may obtain the input image and the condensed HR dataset corresponding to the category of the input image. The training data collector 227 may store, as a training dataset, the input image and the condensed HR dataset corresponding to the category of the input image. The training dataset may be stored in the memory 102 as a new DB. In an embodiment, the training data collector 227 may provide the training dataset, which includes the input image and the condensed HR dataset corresponding to the category of the input image, to the degradation processor 221. Furthermore, in an embodiment, the training data collector 227 may provide the training dataset to the transfer learning unit 225.

In an embodiment, the degradation processor 221 may obtain degraded images by degrading condensed high-resolution images included in the identified category. In an embodiment, the degradation processor 221 may degrade the image quality of the condensed high-resolution images included in the identified category so that the image quality of the condensed high-resolution images corresponds to an image quality of the input image. In addition, the degradation processor 221 may degrade the input image so that the input image is degraded to the same degree as the degree of degradation of the input image. In an embodiment, the degradation processor 221 may provide a degraded dataset to the transfer learning unit 225.

In an embodiment, the transfer learning unit 225 may use, as training data, the condensed high-resolution images included in the identified category and degraded images obtained by performing image quality processing on the condensed high-resolution images. In addition, the transfer learning unit 225 may use, as training data, the input image and the degraded image obtained by performing image quality processing on the input image.

In the present disclosure, because the image processing device 100 does not use a cloud server with unlimited resources, it is necessary to use finite amount of resources more efficiently. In an embodiment, the model training unit 220-1 included in the image processing device 100 may select only images having content characteristics similar to those of an input image from an external DB, trains a model using these images, and use the trained model, thereby enabling more efficient and accurate processing of an image quality of the input image.

FIG. 14C is a diagram illustrating a model training unit according to an embodiment.

Referring to FIG. 14C, according to an embodiment, a model training unit 220-2 may further include a training data selector 1420 in addition to the training data collector 227, the degradation processor 221, and the transfer learning unit 225.

In an embodiment, the model training unit 220-2 may identify what type of content an input image is and selectively obtain a condensed HR dataset corresponding to the type of content of the input image. In an embodiment, the model training unit 220-2 may obtain the multiple condensed datasets (960 of FIG. 9B) by condensing a training dataset by content type. In an embodiment, the model training unit 220-2 may selectively select a condensed dataset corresponding to the same type of content as the input image from among the multiple condensed datasets 960 stored in an external DB and store the condensed dataset in a new DB. The multiple condensed datasets 960 may be stored in the external DB (e.g., the memory 1002 of the server 1000). A condensed dataset corresponding to the same type of content as the input image from among the multiple condensed datasets 960 may be stored in the internal memory 102 of the image processing device 100.

For example, the image processing device 100 may receive various types of content, such as video on demand (VOD) content or real-time broadcast programs provided by content providers. Alternatively, for example, various types of applications may be executed on the image processing device 100, and the image processing device 100 may receive various types of content depending on the properties of the applications.

For example, a content type refer to the type or genre of content, and content types may include video call content, sports content, movie content, music content, game content, animation content, SNS content for real-time chat, web browser content, 2D content, 3D content, and various other types.

In an embodiment, the training data selector 1420 may identify a type of content of an input image by identifying metadata of the input image. For example, the training data selector 1420 may identify, through the metadata of the input image, the properties, type, and genre of an application that provides the input image. The training data selector 1420 may identify the type of content of the input image based on the properties, type, and genre of the application. For example, the training data selector 1420 may identify whether the running application is a video call app, a movie app, or a music app. By identifying the properties of the application, the training data selector 1420 may identify whether the input image corresponds to video call content, movie content, or music content.

In an embodiment, the training data selector 1410 may be an algorithm or a set of algorithms for identifying and classifying the types of content of images, software for executing the set of algorithms, and/or hardware for executing the set of algorithms.

In an embodiment, the training data selector 1420 may select a condensed HR dataset corresponding to the same type of content as the input image and provide the condensed HR dataset to the training data collector 227.

In an embodiment, the training data collector 227 may obtain the input image and the condensed HR dataset corresponding to the same type of content as the input image. The training data collector 227 may store, as a training dataset, the input image and the condensed HR dataset corresponding to the same type of content as the input image. The training dataset may be stored in the memory 102 as a new DB. In an embodiment, the training data collector 227 may provide, to the degradation processor 221, the training dataset including the input image and the condensed HR dataset corresponding to the same type of content as the input image. Furthermore, in an embodiment, the training data collector 227 may provide the training dataset to the transfer learning unit 225.

In an embodiment, the degradation processor 221 may obtain degraded images by degrading condensed high-resolution images included in the condensed HR dataset corresponding to the same type of content as the input image. In an embodiment, the degradation processor 221 may degrade the image quality of the condensed high-resolution images included in the same type of content so that the image quality of the condensed high-resolution images corresponds to an image quality of the input image. In addition, the degradation processor 221 may degrade the input image so that the input image is degraded to the same degree as the degree of degradation of the input image.. In an embodiment, the degradation processor 221 may provide a degraded dataset to the transfer learning unit 225.

In an embodiment, the transfer learning unit 225 may use, as training data, the condensed high-resolution images included in the same type of content as the input image and degraded images obtained by performing image quality processing on the condensed high-resolution images. In addition, the transfer learning unit 225 may use, as training data, the input image and the degraded image obtained by performing image quality processing on the input image.

In the present disclosure, because the image processing device 100 does not use a cloud server with unlimited resources, it is necessary to use finite amount of resources more efficiently. In an embodiment, the model training unit 220-2 included in the image processing device 100 may select only images of the same type of content as an input image from an external DB, train a model using these images, and use the trained model, thereby enabling more efficient and accurate processing of an image quality of the input image.

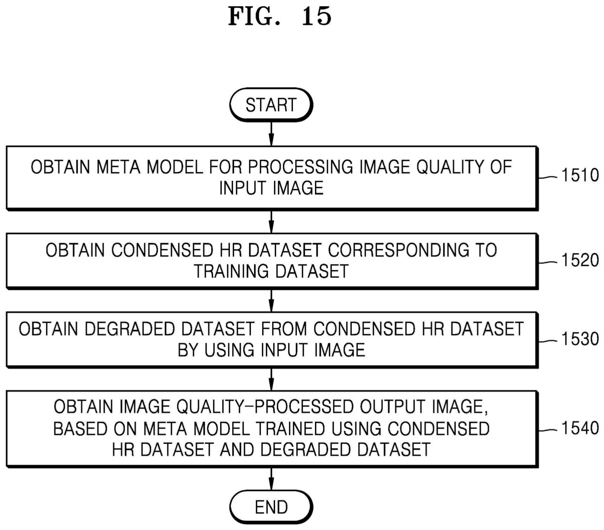

FIG. 15 is a flowchart of a method of performing image quality processing on an input image, according to an embodiment.

Referring to FIG. 15, according to an embodiment, a method of performing image quality processing on an input image based on a condensed HR dataset may include operation 1510 to operation 1540. In an embodiment, operations 1510 to 1540 may be executed by at least one processor included in the image processing device 100. In an embodiment, the method of condensing a training dataset is not limited to that illustrated in FIG. 15, and may further include an operation not illustrated in FIG. 15.

In operation 1510, according to an embodiment, the image processing device 100 may obtain a meta model for processing an image quality of an input image.

In an embodiment, the image processing device 100 may obtain an image quality value of the input image and compare the image quality value of the input image with an image quality value of a pre-trained reference model, and search for a reference model having an image quality value corresponding to the image quality of the input image. In an embodiment, the image processing device may obtain a meta model by using the found reference model.

In operation 1520, according to an embodiment, the image processing device 100 may obtain a condensed HR dataset corresponding to a training dataset.

According to an embodiment, the image processing device 100 may use, as a training dataset for training the meta model, the condensed HR dataset 621 corresponding to a small training dataset instead of a large training dataset.

In an embodiment, the characteristics of the condensed HR dataset 621 may be similar to the characteristics of the training dataset 310 or 611. In an embodiment, parameters of the meta model trained using the condensed HR dataset 621 and the degraded dataset 1302 may approximate the parameters of the meta model trained using the training dataset 310 or 611 and the LR dataset 612 degraded from the training dataset 310 or 611.

In an embodiment, the condensed HR dataset 621 may include high-resolution images obtained by individually condensing high-resolution images within the training dataset 310 or 611 for each cluster included in the cluster set 410. The condensed HR dataset may be obtained via condensation on a cluster-by-cluster basis.

In an embodiment, the image processing device 100 may identify a category of an input image. In an embodiment, the image processing device 100 may obtain a condensed HR dataset corresponding to the category of the input image from among multiple condensed datasets obtained by condensing a training dataset by category. In this case, the training dataset may correspond to the training dataset 910 of FIG. 9A. In addition, the multiple condensed datasets may correspond to the multiple condensed datasets 940 in FIG. 9A, which correspond to a plurality of condensed datasets obtained by condensing the training dataset 910 by category.

In an embodiment, the image processing device 100 may analyze the input image to identify a category of the input image as a probability value. The image processing device 100 may identify a category with a highest probability value as the category of the input image, and select a condensed HR dataset that is a condensation of images included in the identified category from among the multiple condensed datasets 940.

Alternatively, in an embodiment, the image processing device 100 may identify categories of the input image as probability values and select condensed HR datasets from among the multiple condensed datasets 940 in proportion to the probability values of the identified categories. In an embodiment, a condensed HR dataset may be obtained by condensing a training dataset having a category corresponding to the category of the input image. In an embodiment, the image processing device 100 may identify the category of the input image and select a condensed dataset having a category corresponding to the category of the input image from among the multiple condensed datasets 940 stored in an external DB. The condensed dataset having a category corresponding to the category of the input image may be stored in the external DB or in the internal memory 102 of the image processing device 100.

Alternatively, in an embodiment, the image processing device 100 may identify a type of content of the input image by identifying metadata of the input image. For example, the training data selector 1420 may identify, through the metadata of the input image, the properties, type, and genre of an application that provides the input image. The training data selector 1420 may identify the type of content of the input image based on the properties, type, and genre of the application. For example, the image processing device 100 may identify whether the running application is a video call app, a movie app, or a music app. By identifying the properties of the application, the image processing device 100 may identify whether the input image corresponds to video call content, movie content, or music content.

In an embodiment, the image processing device 100 may select a condensed HR dataset from the multiple condensed datasets obtained by condensing the training dataset by content type. In an embodiment, the selected condensed HR dataset may be characterized by being obtained by condensing a training dataset corresponding to the same type of content as the input image. The image processing device 100 may select the condensed HR dataset corresponding to the same type of content as the input image from among the multiple condensed datasets stored in the external DB and store the condensed HR dataset in the internal memory 102. In this case, the training dataset may correspond to the training dataset 910 of FIG. 9B. In addition, the multiple condensed datasets may correspond to the multiple condensed datasets 960 in FIG. 9B, which correspond to a plurality of condensed datasets obtained by condensing the training dataset 910 by content type.

In operation 1530, according to an embodiment, the image processing device 100 may obtain a degraded dataset from the condensed HR dataset by using the input image. For example, the image processing device 100 may obtain a degraded dataset from the condensed HR dataset so that the degraded dataset has an image quality corresponding to an image quality of the input image. For example, the image processing device 100 may obtain a degraded dataset by performing at least one of compression degradation, blurring degradation, resolution adjustment, or noise addition.

In operation 1540, according to an embodiment, the image processing device 100 may obtain an image-quality processed output image, based on the meta model trained using the condensed HR dataset and the degraded dataset.

In an embodiment, instead of training the meta model based on a large training dataset, the image processing device 100 may train the meta model based on a small condensed HR dataset. In an embodiment, the upscaling performance of the meta model trained based on the small condensed HR dataset may be similar to the upscaling performance of the meta model trained based on the large training dataset. Accordingly, the amount of training dataset required for training an AI model for performing upscaling in the image processing device 100 may be reduced, and the amount of external memory usage and power consumption for computation in the image processing device 100 may be reduced.

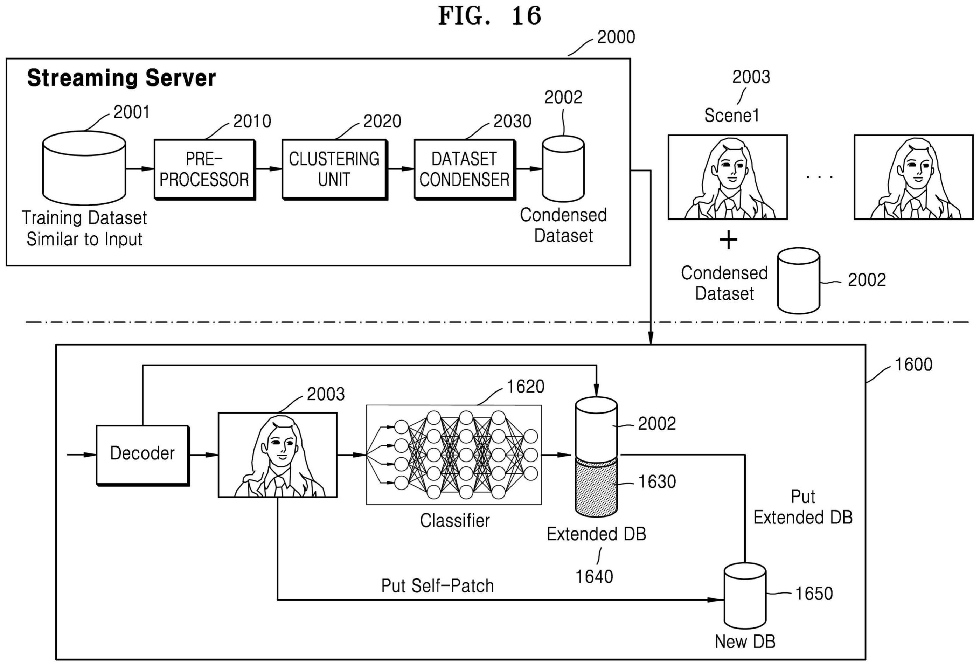

FIG. 16 is a diagram illustrating an operation in which a streaming server condenses a training dataset and an operation in which an image processing device stores training data, according to an embodiment.

Referring to FIG. 16, according to an embodiment, a streaming server 2000 may provide content to an image processing device 1600. According to an embodiment, the streaming server 2000 may collect and condense an HR training dataset corresponding to the characteristics of content, and transmit the condensed HR training dataset to the image processing device 1600 together with the content.

In an embodiment, the streaming server 2000 may be a content provider, which refers to a terrestrial broadcasting station, a cable broadcasting station, an OTT service provider, an IPTV service provider, or the like that provides various types of content including videos to consumers. The streaming server 2000 may provide items for various movies, dramas, etc. available via VOD services or TV programs. In an embodiment, content may be composed of scenes, each including a plurality of frames.

In an embodiment, the streaming server 2000 may provide content composed of scenes 2003, each including a plurality of frames, to the image processing device 1600. In an embodiment, the streaming server 2000 may capture and compress the content and transmit the compressed content.

In an embodiment, the streaming server 2000 may capture the scene 2003 and collect an HR training dataset corresponding to the characteristics of the captured scene 2003. In an embodiment, the streaming server 2000 may collect a large training dataset 2001 containing high-resolution images having characteristics similar to those of the scene 2003. For example, the streaming server 2000 may collect the training dataset 2001 including high-resolution images of the same category as the scene 2003.

In an embodiment, the streaming server 2000 may generate a condensed dataset 2002 by performing preprocessing, clustering, and dataset condensation on the training dataset 2001. For example, the streaming server 2000 may include a preprocessor 2010, a clustering unit 2020, and a dataset condenser 2030. The operations of the preprocessor 2010, the clustering unit 2020, and the dataset condenser 2030 may respectively correspond to those of the preprocessor 1100, the clustering unit 1200, and the dataset condenser 1300 of the server 1000 of FIG. 3.

In an embodiment, the streaming server 2000 may generate a condensed dataset having similar characteristics for each plurality of frames included in the scene 2003. For example, the streaming server 2000 may collect high-resolution images having the same category for each plurality of frames included in the scene 2003, and condense the high-resolution images for each category. The condensed dataset 2002 may have a smaller amount of data than the training dataset 2001.

In an embodiment, the streaming server 2000 may provide, to the image processing device 1600, the content composed of the scenes 2003 and the condensed dataset 2002 corresponding to the content.

In an embodiment, the image processing device 1600 may receive the condensed dataset 2002 corresponding to the content while receiving the content from the streaming server 2000.

In an embodiment, the image processing device 1600 may restore the content received from the streaming server 2000 through a decoder. In an embodiment, the scene 2003 received by the image processing device 1600 from the streaming server 2000 may be an input image input to the image processing device 1600.

In an embodiment, the image processing device 1600 may selectively collect images similar to content characteristics of the input image from an extended DB 1640 and generate a new DB 1650 having characteristics similar to the content characteristics. The new DB 1650 may store a training dataset for training a meta model of the image processing device 1600, and the training dataset may be composed of condensed high-resolution images. The extended DB 1640 may be stored in an internal memory of the image processing device 1600 or in an external DB.

In an embodiment, the extended DB 1640 may store the condensed dataset 2002 received from the streaming server 2000 and a condensed dataset 1630 received from the server (1000 of FIG. 1). The condensed dataset 1630 received from the server 1000 may correspond to the condensed dataset 320 of FIG. 3 or the condensed HR dataset 621 of FIG. 12A.

In an embodiment, the image processing device 1600 may identify a category of the input image by using an image classifier 1620. In an embodiment, the image classifier 1620 may correspond to the training data selector 1410 of FIG. 14A.

In an embodiment, the image processing device 1600 may identify the category of the input image as a probability value by analyzing the input image using the image classifier 1620. The image classifier 1620 may identify a category with a highest probability value as the category of the input image, and select a condensed HR dataset that is a condensation of images included in the identified category from the extended DB 1640.

Alternatively, in an embodiment, the image processing device 1600 may identify categories of the input image as probability values by using the image classifier 1620 and select condensed HR datasets from the extended DB 1640 in proportion to the probability values of the identified categories.

In an embodiment, the image processing device 1600 may store, in the new DB 1650, the condensed HR dataset selected from the extended DB 1640 according to the category of the input image. The new DB 1650 may be stored in the internal memory of the image processing device 1600. The image processing device 1600 may store the condensed HR dataset in the new DB 1650 via the training data collector 227 of FIG. 14A.

In an embodiment, the image processing device 1600 may also include the input image in the new DB 1650.

In an embodiment, the new DB 1650 having a category corresponding to the category of the input image may be stored in an external DB or in the internal memory of the image processing device 1600.

In an embodiment, the image processing device 1600 may receive, from the streaming server 2000, the input image and the condensed dataset 2002 corresponding to the input image. In an embodiment, the image processing device 1600 may obtain a dataset corresponding to the category of the input image from the condensed dataset 2002 received from the streaming server 2000 and the condensed HR dataset received from the server 1000. In an embodiment, the image processing device 1600 may select a dataset corresponding to the category of the input image from the extended DB 1640 that stores the condensed dataset 2002 received from the streaming server 2000 and the condensed HR dataset received from the server 1000.

In an embodiment, the image processing device 1600 may receive condensed datasets from not only the server 1000 but also the streaming server 2000, and may select images of a category corresponding to the input image from the dataset, and store the images in the new DB 1650. In an embodiment, the image processing device 1600 may obtain training data similar to the characteristics of the input image by using various condensed datasets, thereby enabling more efficient training and utilization of the meta model and more efficient and accurate processing of an image quality of the input image.

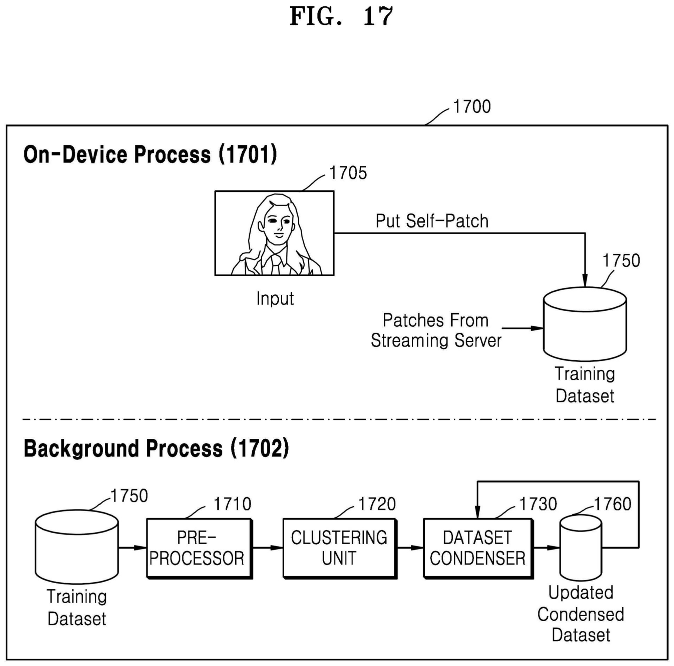

FIG. 17 is a diagram illustrating an operation in which an image processing device condenses a training dataset according to a background process, according to an embodiment.

Referring to FIG. 17, an image processing device 1700 according to an embodiment may operate according to an on-device process 1701 and a background process 1702. The image processing device 1700 may perform image processing by using on-device AI technology according to the on-device process 1701. The image processing device 1700 may condense a training dataset according to the background process 1702 that may not use the on-device AI technology. Because the operation of condensing the training dataset requires a large amount of memory and computation, the image processing device 1700 may perform condensation of the training dataset while not using the on-device AI technology.

In an embodiment, the image processing device 1700 may upscale an input image 1705 while the on-device process 1701 is being performed. The image processing device 1700 may store a training dataset corresponding to the input image 1705 in a new DB 1750. For example, the image processing device 1700 may store the input image 1705 in the new DB 1750. Furthermore, in an embodiment, the image processing device 1700 may store, in the new DB 1750, high-resolution images related to the input image 1705, which are received from a streaming server that provided the input image 1705. The new DB 1750 may be stored in a memory of the image processing device 1700.

In an embodiment, the image processing device 1700 may not perform the training dataset condensation operation while the on-device process 1701 is being performed.

In an embodiment, when it is determined that a sufficient amount of training dataset is stored in the new DB 1750, the image processing device 1700 may condense the training dataset while the on-device AI technology is not operating. For example, when the image processing device 1700 determines that the input image 1705 has sufficient resolution and does not require an upscaling operation, the image processing device 1700 may condense the training dataset without performing the on-device AI technology.

In an embodiment, the image processing device 1700 may condense the training dataset according to the background process 1702 that does not use the on-device AI technology. In an embodiment, the image processing device 1700 may include a preprocessor 1710, a clustering unit 1720, and a dataset condenser 1730. The image processing device 1700 may generate a condensed dataset 1760 by performing preprocessing, clustering, and dataset condensation on the training dataset stored in the new DB 1750. The operations of the preprocessor 1710, the clustering unit 1720, and the dataset condenser 1730 may correspond to those of the preprocessor 1100, the clustering unit 1200, and the dataset condenser 1300 of the server 1000 in FIG. 3.

In an embodiment, the image processing device 1700 may generate the small condensed dataset 1760 from the training dataset stored in the new DB 1750.

In an embodiment, in order to minimize the complexity of the condensation operation, the image processing device 1700 may generate the condensed dataset 1760 by repeating an operation of updating a condensed dataset previously stored in a DB by using the previously stored condensed dataset as an initial value without performing training from the beginning when the input image 1705 is received.

A machine-readable storage medium may be provided in the form of a non-transitory storage medium. In this regard, the term 'non-transitory storage medium' only means that the storage medium does not include a signal (e.g., an electromagnetic wave) and is a tangible device, and the term does not differentiate between where data is semi-permanently stored in the storage medium and where the data is temporarily stored in the storage medium. For example, the 'non-transitory storage medium' may include a buffer for temporarily storing data.

According to an embodiment, methods according to various embodiments disclosed herein may be included in a computer program product when provided. The computer program product may be traded, as a product, between a seller and a buyer. The computer program product may be distributed in the form of a machine-readable storage medium (e.g., compact disc (CD)-ROM) or distributed (e.g., downloaded or uploaded) on-line via an application store or directly between two user devices (e.g., smartphones). For online distribution, at least a part of the computer program product (e.g., a downloadable app) may be at least transiently stored or temporally generated in a machine-readable storage medium such as a memory of a server of a manufacturer, a server of an application store, or a relay server.

## Claims

**1.** A method of condensing a training dataset (310; 611), the method comprising:

generating a cluster set (410) by clustering the training dataset (310; 611) (710);
generating an initial condensed high-resolution (HR) dataset (601) by selecting, for each cluster included in the cluster set (410), some of images included in each cluster (720);
obtaining a first loss (631) of a first neural network model (630) based on the training dataset (310; 611) and obtaining a second loss (641) of a second neural network model (640) based on the initial condensed HR dataset (601) (730); and
generating a condensed HR dataset (621) by updating, based on the first loss (631) and the second loss (641), pixels in each of images included in the initial condensed HR dataset (601) (740).

**2.** The method of claim 1, further comprising performing preprocessing on the training dataset (310; 611) based on an amount of information of each of the images included in the training dataset (310; 611).

**3.** The method of claim 1 or 2, wherein
the obtaining of the first loss (631) and the obtaining of the second loss (641) (730) comprises:

generating a low-resolution (LR) dataset (612) by performing image quality processing on the training dataset (310; 611), and generating a condensed LR dataset (622) by performing image quality processing on the condensed HR dataset (621);
calculating the first loss (631), which is a difference between the training dataset (310; 611) and an output value (635) obtained by inputting the LR dataset (612) to the first neural network model (630); and
calculating the second loss (641), which is a difference between the condensed HR dataset (621) and an output value (645) obtained by inputting the condensed LR dataset (622) to the second neural network model (640).

**4.** The method of any one of claims 1 to 3, wherein
the generating of the condensed HR dataset 621 (740) comprises:

calculating a first gradient for minimizing the first loss (631) of the first neural network model (630) (766);
calculating a second gradient for minimizing the second loss (641) of the second neural network model (640) (767); and
updating pixels in each of images within the condensed HR dataset 621 so that a difference between the first gradient and the second gradient is reduced.

**5.** The method of claim 4, wherein
the generating of the condensed HR dataset 621 (740) comprises:

calculating a matching loss (650), which is a difference between the first gradient and the second gradient (770);
calculating a matching gradient for minimizing the matching loss (650) (780); and
updating the condensed HR dataset (621) by applying the matching gradient to pixels in each of the images within the condensed HR dataset (621) (790),
wherein the matching gradient represents a slope of the matching loss (650) with respect to the pixels in each of the images within the condensed HR dataset (621).

**6.** The method of claim 4 or 5, wherein

the first gradient represents a slope of the first loss (631) with respect to parameters of the first neural network model (630), and
the second gradient represents a slope of the second loss (641) with respect to parameters of the second neural network model (640).

**7.** The method of any one of claims 1 to 6, wherein the first loss (631) and/or the second loss (641) are not a mean absolute error (MAE).

**8.** The method of any one of claims 1 to 7, further comprising generating a condensed LR dataset (622) by performing image quality processing on the condensed HR dataset (621) (850).

**9.** The method of claim 8, further comprising updating parameters of the second neural network model (640) by applying the updated condensed HR dataset (621) and the condensed LR dataset (622) to the second neural network model (640) (860).

**10.** The method of claim 9, wherein
the updating of the parameters of the second neural network model (640) (860) comprises:

calculating the second loss (641) between the condensed HR dataset (621) and the output value (645) obtained by applying the condensed LR dataset (622) to the second neural network model (640);
calculating a second gradient for minimizing the second loss (641); and
updating the parameters of the second neural network model (640) by applying the second gradient to the parameters of the second neural network model (640),
wherein the second gradient represents a slope of the second loss (641) with respect to the parameters of the second neural network model (640).

**11.** The method of any one of claims 1 to 10, wherein initial parameters of the second neural network model (640) are identical to initial parameters of the first neural network model (630).

**12.** The method of any one of claims 1 to 11, wherein the parameters of the second neural network model (640) trained using the condensed HR dataset (621) approximate the parameters of the first neural network model (630) trained using the training dataset (310; 611).

**13.** The method of any one of claims 1 to 12, further comprising:

classifying the training dataset (310; 611) based on categories (1010); and
obtaining multiple condensation datasets (940) by condensing the training dataset (310; 611) for each of the categories (1020).

**14.** The method of any one of claims 1 to 13, wherein the generating of the initial condensed HR dataset by selecting, for each cluster included in the cluster set (410), some of the images included in each cluster (720) comprises determining, based on a user input, the number of the some images to be selected from among the images included in each cluster.

**15.** An image processing device (100) comprising:

memory (102) storing one or more instructions; and
one or more processors (101) configured to execute the one or more instructions stored in the memory (102), wherein the one or more processors (101) are configured to execute the one or more instructions to
obtain a meta model for processing an image quality of an input image (110) (1510),
obtain a condensed high-resolution (HR) dataset (621) corresponding to a training dataset (310; 611) (1520),
obtain a degraded dataset (1302) from the condensed HR dataset (621) by using the input image (110) (1530), and
obtain an image-quality processed output image (120), based on the meta model trained using the condensed HR dataset (621) and the degraded dataset (1302) (1540).

FIG. 1

INPUT IMAGE
100
OUTPUT IMAGE
110
120
1000
10
SERVER
20
Large Training Dataset
Small Training Dataset

FIG. 2

100
IMAGE PROCESSING DEVICE
101
PROCESSOR
102
MEMORY
1000
SERVER
1001
PROCESSOR
1002
MEMORY

FIG. 3
1000
1001
310
Training Dataset
1100
REPROCESSOR
1200
CLUSTERING UNIT
1300
DATASET CONDENSER
320
Condensed Dataset

FIG. 4
310
Tranining Dataset
CLUSTER SET
410
411
412
413
Cluster 0
Cluster 1
Cluster 127
1200
CLUSTERING UNIT

FIG. 5

1300
Condensed dataset
621
Condensed LR dataset
622
410
CLUSTER SET
510
INITIALIZATION UNIT
520
GRADIENT MATCHING UNIT
530
CONDENSED HR DATASET UPDATER
540
CONDENSED LR DATASET UPDATER
550
PARAMETER UPDATER
Initial condensed HR dataset
601

FIG. 6

1300
Forward pass
Backward pass
Initial condensed HR dataset
601
530
Training dataset: HR dataset
611
631
Loss
635
Output
630
Update
650
GRADIENT MATCHING UNIT
Matching Loss
520
Training dataset: LR dataset
612
Condensed HR dataset
621
641
Loss
645
Output
640
Condensed LR dataset
622
540
Down Sample
Gaussian Blur
JPEG (Enc/Dec)

FIG. 7A
411
412
413
410
CLUSTER SET
CLUSTERING UNIT (1200)
Cluster 0
Cluster 1
Cluster 127
SELECT ONE
701
INITIAL CONDENSED HR DATASET
INITIALIZATION UNIT (510)
Cluster 0
Cluster 1
Cluster 127
DATASET CONDENSER (1300)
702
CONDENSED HR DATASET
ITERATION UNIT (520, 530, 540, 550)
Cluster 0
Cluster 1
Cluster 127

FIG. 7B

Cluster 0
Cluster 1
Cluster 127
INITIAL CONDENSED HR DATASET
701
Cluster 0
Cluster 1
Cluster 127
CONDENSED HR DATASET
702
INITIALIZATION UNIT (510)
ITERATION UNIT (520, 530, 540, 550)
DATASET CONDENSER (1300)

FIG. 8A

START
GENERATE CLUSTER SET BY CLUSTERING IMAGES INCLUDED IN TRAINING DATASET
710
GENERATE INITIAL CONDENSED HIGH-RESOLUTION (HR) DATASET BY SELECTING, FOR EACH CLUSTER IN CLUSTER SET, SOME OF IMAGES INCLUDED IN EACH CLUSTER
720
OBTAIN FIRST LOSS BY INPUTTING TRAINING DATASET TO FIRST NEURAL NETWORK MODEL, AND OBTAIN SECOND LOSS BY INPUTTING INITIAL CONDENSED HR DATASET TO SECOND NEURAL NETWORK MODEL
730
GENERATE CONDENSED HR DATASET BY UPDATING PIXELS IN EACH OF IMAGES INCLUDED IN INITIAL CONDENSED HR DATASET BASED ON FIRST LOSS AND SECOND LOSS
740
END

FIG. 8B

START
GENERATE INITIAL CONDENSED HR DATASET BY SELECTING, FOR EACH CLUSTER IN CLUSTER SET, SOME OF IMAGES INCLUDED IN EACH CLUSTER
750
OBTAIN LOW-RESOLUTION (LR) DATASET BY PERFORMING IMAGE QUALITY PROCESSING ON TRAINING DATASET
762
OBTAIN INITIAL CONDENSED LR DATASET BY PERFORMING IMAGE QUALITY PROCESSING ON INITIAL CONDENSED HR DATASET
763
OBTAIN FIRST LOSS OF FIRST NEURAL NETWORK MODEL, BASED ON TRAINING DATASET AND LR DATASET
764
OBTAIN SECOND LOSS OF SECOND NEURAL NETWORK MODEL, BASED ON INITIAL CONDENSED HR DATASET AND INITIAL CONDENSED LR DATASET
765
CALCULATE FIRST GRADIENT FOR MINIMIZING FIRST LOSS
766
CALCULATE SECOND GRADIENT FOR MINIMIZING SECOND LOSS
767
CALCULATE MATCHING LOSS THAT IS DIFFERENCE BETWEEN FIRST GRADIENT AND SECOND GRADIENT
770
CALCULATE MATCHING GRADIENT FOR MINIMIZING MATCHING LOSS
780
UPDATE, BASED ON MATCHING GRADIENT, PIXELS IN EACH OF IMAGES INCLUDED IN CONDENSED HR DATASET
790
END

FIG. 8C

START
GENERATE CLUSTER SET BY CLUSTERING IMAGES INCLUDED IN TRAINING DATASET
810
GENERATE INITIAL CONDENSED HR DATASET BY SELECTING, FOR EACH OF CLUSTERS IN CLUSTER SET, SOME OF IMAGES INCLUDED IN EACH CLUSTER
820
OBTAIN FIRST LOSS BY INPUTTING TRAINING DATASET TO FIRST NEURAL NETWORK MODEL AND SECOND LOSS BY INPUTTING INITIAL CONDENSED HR DATASET TO SECOND NEURAL NETWORK MODEL
830
GENERATE CONDENSED HR DATASET BY UPDATING, BASED ON FIRST LOSS AND SECOND LOSS, PIXELS IN EACH OF IMAGES INCLUDED IN INITIAL CONDENSED HR DATASET
840
GENERATE CONDENSED HR DATASET BY PERFORMING IMAGE QUALITY PROCESSING ON CONDENSED HR DATASET
850
UPDATE PARAMETERS OF SECOND NEURAL NETWORK MODEL BY APPLYING CONDENSED HR DATASET AND CONDENSED LR DATASET TO SECOND NEURAL NETWORK MODEL
860
END

FIG. 9A
1000
910
Training Dataset
920
Classifier
Face
Text
General
Classified Dataset
930
PRE-PROCESSOR
1100
CLUSTERING UNIT
1200
DATASET CONDENSER
1300
Multiple Condensed Datasets
940

FIG. 9B

1000
910
Training Dataset
920
Classifier
VIDEO CALL
SPORTS
MOVIE
Classified Dataset
950
PRE-PROCESSOR
1100
CLUSTERING UNIT
1200
DATASET CONDENSER
1300
Multiple Condensed Datasets
960

FIG. 10

START
CLASSIFY TRAINING DATASET BASED ON CATEGORIES
1010
OBTAIN MULTIPLE CONDENSED HR DATASETS VIA CONDENSATION BY CATEGORY
1020
END

FIG. 11

100
101
230
INPUT IMAGE
IMAGE QUALITY PROCESSOR
OUTPUT IMAGE
UPDATED MODEL
220
MODEL TRAINING UNIT
QUALITY VALUE
210
IMAGE QUALITY DETERMINER

FIG. 12A

220
Condensed HR Dataset
621
MODEL TRAINING UNIT
227
INPUT IMAGE
TRAINING DATA COLLECTOR
221
225
QUALITY VALUE
DEGRADATION PROCESSOR
TRANSFER LEARNING UNIT
UPDATED MODEL
META MODEL

FIG. 12B

220
Condensed HR Dataset
621
MODEL TRAINING UNIT
227
INPUT IMAGE
TRAINING DATA COLLECTOR
221
225
QUALITY VALUE
DEGRADATION PROCESSOR
TRANSFER LEARNING UNIT
UPDATED MODEL
223
META MODEL OBTAINER
REFERENCE MODEL DB

FIG. 13

210
IMAGE QUALITY DETERMINER
QUALITY VALUE
(Kernel Signal,
Compression Quality,
Noise etc.)
DEGRADATION PROCESSOR
221
Compressing
Blurring
Down sampling
Adding Noise
1301
TRAINING DB
Degraded dataset
1302
225
TRANSFER LEARNING UNIT

# FIG. 14A

220-1
Multiple Condensed HR Datasets
940
Face
Text
General
MODEL TRAINING UNIT
1410
TRAINING DATA SELECTOR
227
TRAINING DATA COLLECTOR
INPUT IMAGE
221
225
QUALITY VALUE
DEGRADATION PROCESSOR
TRANSFER LEARNING UNIT
UPDATED MODEL
META MODEL

FIG. 14B

1402
TRAINING DB
227
TRAINING DATA COLLECTOR
1410
TRAINING DATA SELECTOR
Face 0.8
Text 0.1
General 0.1
920
Classifier
940
Face
Text
General
1401
INPUT IMAGE

FIG. 14C

220-2
Multiple Condensed HR Datasets
960
VIDEO CALL
SPORTS
MUSIC
ANIMATION
MOVIE
MODEL TRAINING UNIT
1420
METADATA OF INPUT IMAGE
TRAINING DATA SELECTOR
227
INPUT IMAGE
TRAINING DATA COLLECTOR
221
225
QUALITY VALUE
DEGRADATION PROCESSOR
TRANSFER LEARNING UNIT
UPDATED MODEL
META MODEL

FIG. 15

START
OBTAIN META MODEL FOR PROCESSING IMAGE QUALITY OF INPUT IMAGE
1510
OBTAIN CONDENSED HR DATASET CORRESPONDING TO TRAINING DATASET
1520
OBTAIN DEGRADED DATASET FROM CONDENSED HR DATASET BY USING INPUT IMAGE
1530
OBTAIN IMAGE QUALITY-PROCESSED OUTPUT IMAGE, BASED ON META MODEL TRAINED USING CONDENSED HR DATASET AND DEGRADED DATASET
1540
END

FIG. 16
2000
Streaming Server
2001
Training Dataset Similar to Input
2010
PRE-PROCESSOR
2020
CLUSTERING UNIT
2030
DATASET CONDENSER
2002
Condensed Dataset
2003
Scene1
Condensed Dataset
2002
1600
Decoder
2003
1620
Classifier
2002
1630
Extended DB
1640
Put Extended DB
Put Self-Patch
1650
New DB

FIG. 17

1700
On-Device Process (1701)
1705
Put Self-Patch
1750
Input
Patches From Streaming Server
Training Dataset
Background Process (1702)
1750
1710
1720
1730
1760
PRE-PROCESSOR
CLUSTERING UNIT
DATASET CONDENSER
Training Dataset
Updated Condensed Dataset

## INTERNATIONAL SEARCH REPORT

International application No.
**PCT/KR2024/005078**

**A. CLASSIFICATION OF SUBJECT MATTER**

**G06N 3/0495**(2023.01)i; **G06N 3/096**(2023.01)i; **G06N 3/08**(2006.01)i; **G06N 3/045**(2023.01)i; **G06T 3/40**(2006.01)i

According to International Patent Classification (IPC) or to both national classification and IPC

**B. FIELDS SEARCHED**

Minimum documentation searched (classification system followed by classification symbols)

G06N 3/0495(2023.01); G06N 3/04(2006.01); G06N 3/08(2006.01); H04N 19/124(2014.01); H04N 19/13(2014.01); H04N 19/132(2014.01); H04N 19/577(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 압축 고화질 데이터(condensed high resolution data), 학습 데이터(training data), 업스케일링(upscaling), 신경망 모델(neural network model), 로스(loss), 그래디언트 매칭(gradient matching)

**C. DOCUMENTS CONSIDERED TO BE RELEVANT**

| Category* | Citation of document, with indication, where appropriate, of the relevant passages | Relevant to claim No. |
|---|---|---|
| Y<br>A | ZHAO, Bo et al. DATASET CONDENSATION WITH GRADIENT MATCHING. arXiv:2006.05929v3. March 2021. [Retrieved on 05 July 2024]. Retrieved from <https://arxiv.org/pdf/2006.05929v3>.<br>See pages 1-6; and figure 1. | 1-2,4-7,11-15<br>3,8-10 |
| Y | KR 10-2022-0055970 A (INDUSTRY-ACADEMIC COOPERATION FOUNDATION, YONSEI UNIVERSITY) 04 May 2022 (2022-05-04)<br>See paragraphs [0040] and [0054]; claims 1-2; and figure 1. | 1-2,4-7,11-15 |
| A | KIM, Jang-Hyun et al. Dataset Condensation via Efficient Synthetic-Data Parameterization. Proceedings of the 39th International Conference on Machine Learning. Volume 162, 2022.<br>See pages 11104-11105; and figures 1 and 3. | 1-15 |
| A | WO 2022-231643 A1 (GOOGLE LLC) 03 November 2022 (2022-11-03)<br>See claim 1; and figures 1A-2. | 1-15 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 July 2024** | **26 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No. **PCT/KR2024/005078**

**C. DOCUMENTS CONSIDERED TO BE RELEVANT**

| Category* | Citation of document, with indication, where appropriate, of the relevant passages | Relevant to claim No. |
|---|---|---|
| A | KR 10-2467091 B1 (BLUEDOT INC.) 16 November 2022 (2022-11-16) See paragraphs [0038]-[0043] and [0071]-[0078]. | 1-15 |

Form PCT/ISA/210 (second sheet) (July 2022)

**INTERNATIONAL SEARCH REPORT**
**Information on patent family members**

International application No.
**PCT/KR2024/005078**

| Patent document cited in search report | Publication date (day/month/year) | Patent family member(s) | Publication date (day/month/year) |
|---|---|---|---|
| KR 10-2022-0055970 A | 04 May 2022 | None | |
| WO 2022-231643 A1 | 03 November 2022 | EP 4241448 A1 | 13 September 2023 |
| | | JP 2024-511920 A | 18 March 2024 |
| | | KR 10-2023-0128335 A | 04 September 2023 |
| | | US 2024-0022760 A1 | 18 January 2024 |
| KR 10-2467091 B1 | 16 November 2022 | US 2024-0029202 A1 | 25 January 2024 |

Form PCT/ISA/210 (patent family annex) (July 2022)